(19) Europäisches Patentamt / European Patent Office / Office européen des brevets

(11) **EP 2 363 975 B1**

(12) **FASCICULE DE BREVET EUROPEEN**

(45) Date de publication et mention de la délivrance du brevet:
**01.01.2020 Bulletin 2020/01**

(51) Int Cl.:
***G06F 7/72*** *(2006.01)*     ***H04L 9/00*** *(2006.01)*
***H04L 9/30*** *(2006.01)*

(21) Numéro de dépôt: **11001491.7**

(22) Date de dépôt: **23.02.2011**

(54) **Circuit intégré protégé contre une analyse par canal auxiliaire horizontale**

Integrierter Schaltkreis, der gegen einen horizontalen Seitenkanalangriff geschützt ist

Integrated circuit protected against horizontal side channel attack

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.03.2010 FR 1000834**
           **31.03.2010 US 750953**
           **01.03.2010 FR 1000833**
           **31.03.2010 US 750846**

(43) Date de publication de la demande:
**07.09.2011 Bulletin 2011/36**

(73) Titulaire: **VERIMATRIX**
**13590 Meyreuil (FR)**

(72) Inventeurs:
- **Feix, Benôit**
  **13400 Aubagne (FR)**
- **Gagnerot, Georges**
  **13011 Marseille (FR)**
- **Roussellet, Mylène**
  **13290 Les Milles (FR)**
- **Verneuil, Vincent**
  **13100 Aix En Provence (FR)**

(74) Mandataire: **Marchand, André et al**
**OMNIPAT**
**24 Place des Martyrs de la Résistance**
**13100 Aix-en-Provence (FR)**

(56) Documents cités:
**WO-A1-02/071687     WO-A2-2007/000702**

- **FREDERIC AMIEL ET AL: "On the BRIP Algorithms Security for RSA", 13 mai 2008 (2008-05-13), INFORMATION SECURITY THEORY AND PRACTICES. SMART DEVICES, CONVERGENCE AND NEXT GENERATION NETWORKS; [LECTURE NOTES IN COMPUTER SCIENCE], SPRINGER BERLIN HEIDELBERG, BERLIN, HEIDELBERG, PAGE(S) 136 - 149, XP019089179, ISBN: 978-3-540-79965-8 * pages 4-5,14 ***
- **KOCHER P C ED - KOBLITZ N (ED): "TIMING ATTACKS ON IMPLEMENTATIONS OF DIFFIE-HELLMAN, RSA, DSS, AND OTHER SYSTEMS", ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS; [PROCEEDINGS OF THE ANNUAL INTERNATIONAL CRYPTOLOGY CONFERENCE (CRYPTO)], BERLIN, SPRINGER, DE, vol. CONF. 16, 18 août 1996 (1996-08-18), pages 104-113, XP000626590, ISBN: 978-3-540-61512-5**
- **"Differential Power Analysis. In M. J. Wiener, editor, Advances in Cryptology - CRYPTO '99" In: P. C. KOCHER; J. JAFFE; B. JUN.: "Lecture Notes in Computer Science", 1999, SPRINGER vol. 1666, pages 388-397,**
- **KOCHER P ET AL: "DIFFERENTIAL POWER ANALYSIS", SECURITY IN COMMUNICATION NETWORKS : THIRD INTERNATIONAL CONFERENCE ; REVISED PAPERS / SCN 2002, AMALFI, ITALY, SEPTEMBER 11 - 13, 2002; [LECTURE NOTES IN COMPUTER SCIENCE , ISSN 0302-9743], SPRINGER VERLAG, DE, vol. 1666, 1 January 1999 (1999-01-01), pages 388-397, XP001061337, DOI: 10.1007/3-540-48405-1_25 ISBN: 978-3-540-24128-7**

• WALTER C D ED - KOC C K ET AL: "SLIDING WINDOWS SUCCUMBS TO BIG MAC ATTACK", CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS; [LECTURE NOTES IN COMPUTER SCIENCE], BERLIN : SPRINGER, DE, vol. VOL. 2162, 14 May 2001 (2001-05-14), pages 286-299, XP001061169, ISBN: 978-3-540-42521-2

**Description**

La présente invention concerne un circuit intégré comprenant une fonction de multiplication configurée pour exécuter une opération de multiplication de deux mots binaires x et y en une pluralité d'étapes élémentaires de multiplication de composantes $x_i$ du mot x par des composantes $y_j$ du mot y.

La présente invention concerne notamment un circuit intégré comprenant une fonction de traitement d'une donnée externe dont l'exécution comprend au moins une étape de branchement conditionnel vers au moins une première étape de multiplication de mots binaires ou une seconde étape de multiplication de mots binaires, le branchement conditionnel étant fonction d'une donnée privée du circuit intégré.

La présente invention concerne notamment un procédé et un système de test d'un tel circuit intégré.

La présente invention concerne également un procédé pour protéger un circuit intégré du type précité contre une analyse par canal auxiliaire et des moyens de contre-mesure permettant à un tel circuit intégré de passer un processus de qualification ou de certification incluant un procédé de test selon l'invention.

On trouve à l'heure actuelle des processeurs sécurisés de plus en plus évolués dans les cartes à puce ou autres systèmes embarqués comme des clefs USB, des décodeurs et des consoles de jeu, et de façon générale toute plate-forme de module sécurisée appelée TPM ("Trusted Platform Module"). Ces processeurs, sous forme de circuits intégrés, ont généralement des cœurs CISC 8 bits ("Complex Instruction Set Computer") ou des cœurs RISC ("Reduced Instruction Set Computer") de 8, 16 bit ou plus, les processeurs 32 bits étant les plus répandus aujourd'hui. Certains circuits intégrés comportent également des coprocesseurs dédiés à certains calculs cryptographiques, notamment des accélérateurs arithmétiques pour les algorithmes asymétriques tels que RSA, DSA, ECDSA, etc.

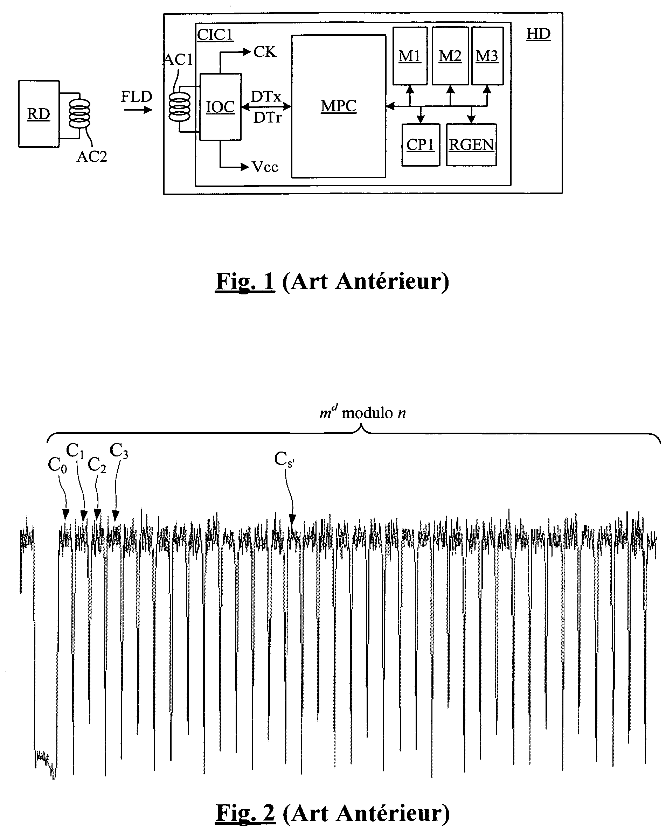

La figure 1 représente à titre d'exemple un circuit intégré CIC1 sécurisé agencé sur un support portable HD ("Handheld Device"), par exemple une carte plastique ou tout autre support. Le circuit intégré comprend un microprocesseur MPC, un circuit d'entrée/sortie IOC, des mémoires M1, M2, M3 reliées au microprocesseur par un bus de données et d'adresse et, optionnellement, un coprocesseur CP1 de calcul cryptographique ou accélérateur arithmétique, et un générateur RGEN de nombre aléatoire. La mémoire M1 est une mémoire de type RAM ("Random Access Memory") contenant des données d'application volatiles. La mémoire M2 est une mémoire non volatile, par exemple une mémoire EEPROM ou Flash, contenant des programmes application. La mémoire M3 est une mémoire morte ou mémoire ROM ("Read Only Memory") contenant le système d'exploitation du microprocesseur ("Operating System").

Le circuit d'interface de communication IOC peut être du type à contact, par exemple selon la norme ISO/IEC 7816, du type sans contact à couplage inductif, par exemple selon la norme ISO/IEC 14443A/B ou ISO/IEC 13693, du type sans contact par couplage électrique (circuit d'interface UHF), ou à la fois du type à contact et sans contact (circuit intégré dit "combi"). Le circuit d'interface IOC représenté sur la figure à titre d'exemple est un circuit d'interface sans contact à couplage inductif équipé d'une bobine d'antenne AC1 pour recevoir un champ magnétique FLD. Le champ FLD est émis par un lecteur de carte RD qui est lui-même équipé d'une bobine d'antenne AC2. Le circuit IOC comprend des moyens de réception et de décodage de données DTr émises par le lecteur RD et des moyens de codage et d'émission de données DTx fournies par le microprocesseur MPC. Il peut comprendre également des moyens pour extraire du champ magnétique FLD une tension Vcc d'alimentation du circuit intégré et un signal d'horloge CK.

Dans certains modes de réalisation, le circuit intégré CIC1 peut être configuré pour exécuter des opérations de chiffrement, de déchiffrement ou de signature de messages *m* qui lui sont envoyés, au moyen d'une fonction de cryptographie basée sur l'exponentiation modulaire utilisant une clé secrète *d* et un module cryptographique *n*, par exemple une fonction de cryptographie RSA.

Rappels concernant l'exponentiation modulaire

La fonction d'exponentiation modulaire a pour expression mathématique :

$$m^d \text{ modulo}(n),$$

*m* étant une donnée d'entrée, *d* un exposant et *n* un diviseur. La fonction d'exponentiation modulaire consiste donc à calculer le reste de la division par *n* de *m* à la puissance *d*.

Une telle fonction est utilisée par divers algorithmes de cryptographie, tels que l'algorithme RSA ("Rivest, Shamir et Adleman"), l'algorithme DSA ("Digital Signature Algorithm"), ECDH ("Elliptic Curve Diffie Hellman"), ECDSA ("Elliptic Curve Digital Signature Algorithm"), ElGamal, etc. La donnée *m* est alors un message à chiffrer et l'exposant *d* est une clé privée.

Elle peut être implémentée au moyen de l'algorithme suivant (exponentiation modulaire selon la méthode de Barrett) :

**Algorithme d'exponentiation**

**Entrée :**

*"m" et" n" des entiers tels que m < n*

*"d" un exposant de v bits tel que d = (d$_{v-1}$ d$_{v-2}$.... d$_0$)$_2$*

**Sortie :** *a = m$^d$* modulo *n*

**Étape 1 :** *a* = 1

**Étape 2 : Pré-calculs de la réduction de Barrett**

**Étape 3 :** pour *s* allant de 1 à *v* faire :

        **(Etape 3A)** *a* = BRED(LIM(*a,a*),*n*)

        **(Etape 3B)** *si d$_{v-s}$ = 1 alors a* = BRED(LIM(*a,m*),*n*)

**Étape 4 :** Retourner résultat *a*

dans lequel le message *m* et le module *n* sont des grands entiers (par exemple de 1024 bits, 2048 bits ou plus), *d* est l'exposant de *v* bits exprimé en base 2 (d$_{v-1}$, d$_{v-2}$,.... d$_0$), "LIM" est la fonction de multiplication de grands entiers ("Long Integer Multiplication") et "BRED" une fonction de réduction selon la méthode de Barrett ("Barrett REDuction") appliquée au résultat de la multiplication LIM.

Dans un circuit intégré tel que celui représenté sur la figure 1, un tel algorithme d'exponentiation modulaire peut être exécuté par le microprocesseur MP ou par le coprocesseur CP1. Alternativement, certaines étapes de l'algorithme peuvent être exécutées par le microprocesseur tandis que d'autres sont exécutées par le coprocesseur, si celui-ci est simplement un accélérateur mathématique. Par exemple les multiplications LIM des étapes 3A et 3B peuvent être "sous-traitées" par le microprocesseur au coprocesseur, mais le calcul entier de l'exponentiation modulaire peut également être sous-traité au coprocesseur, selon les cas.

Par ailleurs, la multiplication LIM de *a* par *a* (Etape 3A) ou de *a* par *m* (Étape 3B) est généralement exécutée par le circuit intégré au moyen d'une fonction de multiplication de mots binaires x et y qui comprend une pluralité d'étapes élémentaires de multiplication de composantes x$_i$ (*a$_i$*) du mot x par des composantes y$_j$ (*a$_j$* ou *m$_j$*) du mot y, i et j étant des indices d'itération, pour obtenir des résultats intermédiaires qui sont concaténés pour former le résultat général de la multiplication.

Rappels concernant l'analyse par canal auxiliaire

Afin de vérifier le niveau de sécurité qu'offre un circuit intégré sécurisé destiné à être commercialisé, des tests de qualification ou de certification sont prévus au stade industriel, comprenant notamment des tests de la robustesse du circuit intégré face à des analyses par canal auxiliaire ("Side Channel Analysis") visant à découvrir les données secrètes du circuit intégré.

L'algorithme d'exponentiation est donc sujet à de tels contrôles. Plus particulièrement, l'analyse par canal auxiliaire de l'algorithme d'exponentiation modulaire consiste en une déduction bit à bit de la valeur de l'exposant par l'observation du "comportement" du circuit intégré lors de l'exécution de l'étape 3 de l'algorithme, à chaque itération de rang s de cette étape. Cette observation vise à déterminer si l'étape 3 considérée comprend l'étape 3A seulement ou comprend l'étape 3A suivie de l'étape 3B.

Dans le premier cas, on en déduit que le bit *d$_{v-s}$* de l'exposant est égal à 0. Dans le second cas, on en déduit que le bit *d$_{v-s}$* est égal à 1. En procédant étape par étape, pour chaque itération de s=1 allant à *s = v*, on peut en déduire tous les bits *d$_{v-s}$* de l'exposant pour *s* allant de 1 à v-1. Par exemple, lors des premières itérations de l'algorithme d'exponentiation, la suite d'opérations :

$$LIM(a,a), LIM(a,m)$$

révèle que le premier bit de l'exposant est 1, tandis que la suite d'opérations :

$$LIM(a,a) \; LIM(a,a)$$

permet de savoir que le premier bit de l'exposant est 0.

Pour connaître le bit suivant de l'exposant, il faut déterminer la nature des opérations suivantes. Par exemple, si ces opérations sont :

$$\text{LIM}(a,a) \ \text{LIM}(a,m) \ \text{LIM}(a,a) \ \text{LIM}(a,m)$$

ou :

$$\text{LIM}(a,a) \ \text{LIM}(a,a) \ \text{LIM}(a,m)$$

les deux dernières opérations LIM(*a,a*) LIM(*a,m*) révèlent que le deuxième bit de l'exposant vaut 1. Inversement, dans la suite d'opérations suivantes :

$$\text{LIM}(a,a) \ \text{LIM}(a,m) \ \text{LIM}(a,a) \ \text{LIM}(a,a)$$

$$\text{LIM}(a,a) \ \text{LIM}(a,m) \ \text{LIM}(a,a) \ \text{LIM}(a,a)$$

la troisième opération LIM(*a,a*) révèle que le deuxième bit de l'exposant vaut 0 car elle est suivie de l'opération LIM(*a,a*) et n'est pas suivie de l'opération LIM(*a,m*).

Ainsi, la découverte des bits de l'exposant nécessite de lever des indéterminations sur les étapes de branchement conditionnel qu'exécute le circuit intégré en fonction de ces bits. L'observation de la consommation de courant du circuit intégré permet généralement de lever ces indéterminations.

Rappels concernant l'analyse par canal auxiliaire basée sur l'observation de la consommation de courant

Un composant électronique comprend généralement des milliers de portes logiques qui commutent différemment en fonction des opérations exécutées. Ces commutations créent des variations de consommation de courant de très courte durée, par exemple de quelques nanosecondes, qui sont mesurables. Notamment, les circuits intégrés réalisés avec la technologie CMOS comprennent des portes logiques constituées de transistor de polarisation à l'état haut PMOS ("pull-up") et de transistors de polarisation à l'état bas NMOS ("pull down") ayant une très grande impédance d'entrée sur leur borne de contrôle de grille. Ces transistors ne consomment du courant entre leurs bornes de drain et de source que lors de leur commutation, correspondant au passage à 1 ou à 0 d'un nœud logique. Ainsi, la consommation de courant dépend des données manipulées par le microprocesseur et de ses différents périphériques : mémoire, données circulant sur le bus de données ou d'adresse, accélérateur cryptographique, etc.

En particulier, l'opération de multiplication de longs entiers LIM possède une signature en consommation de courant caractéristique et différente des opérations logiques ordinaires. De plus, l'opération LIM(*a,a*) se distingue de l'opération LIM(*a,m*) en ce qu'elle consiste à calculer un carré ($a^2$) tandis que LIM(*a,m*) consiste à calculer le produit de *a* par *m*, ce qui peut conduire à deux signatures en consommation de courant différentes.

Les procédés de test par canal auxiliaire classiques, basés sur l'observation de la consommation de courant, comprennent les procédés SPA ("Single Power Analysis"), DPA ("Differential Power Analysis"), CPA ("Correlation Power Analysis") et Big Mac.

L'analyse SPA

Les procédés de test par analyse SPA ont été divulgués par Kocher (Réf. 1) (Les références des publications citées sont fournies en dernière page de la présente description). L'analyse SPA ne nécessite normalement que l'acquisition d'une seule courbe de consommation de courant. Elle vise à obtenir de l'information sur l'activité du circuit intégré en observant la partie de la courbe de consommation correspondant à un calcul cryptographique, puisque la courbe de courant varie suivant les opérations exécutées et les données manipulées.

Dans un premier temps, l'analyse SPA permet d'identifier les calculs effectués et les algorithmes implémentés par le circuit intégré. On capture d'abord une courbe générale de consommation de courant du circuit intégré au moyen d'un système de test qui mesure sa consommation de courant. Dans le cas d'un circuit intégré exécutant un calcul d'exponentiation modulaire, on peut ensuite repérer au sein de cette courbe générale de consommation de courant des courbes de consommation correspondant à l'exécution des multiplications LIM(*a,a*) et LIM(*a,m*) à chaque itération de rang s de l'algorithme, comme illustré sur la figure 2. On distingue dans cette courbe de consommation des courbes $C_0$, $C_1$, $C_3$,.. $C_{s'}$...

Chaque courbe de consommation $C_{s'}$ est constituée de points de consommation mesurés avec une fréquence d'échantillonnage déterminée, pouvant être supérieure ou égale à la fréquence de l'horloge du circuit intégré. Chaque courbe de consommation correspond à une "$s$ième" itération de l'étape 3 de l'algorithme d'exponentiation. La relation entre le rang s' de chaque courbe de consommation $C_{s'}$ et le nombre de fois "s" où l'étape 3 de l'algorithme d'exponentiation a déjà été exécutée (y compris l'exécution correspondant à la courbe $C_{s'}$ considéré) est donnée par la relation :

$$s' = s + H(d_{v-1}, d_{v-2}.... d_{v-s-1})$$

si la courbe $C_{s'}$ correspond à l'exécution de l'étape 3A,
ou par la relation :

$$s' = s + H(d_{v-1}, d_{v-2}.... d_{v-s-1}) + 1$$

si la courbe $C_{s'}$ correspond à l'exécution de l'étape 3B.

La relation entre s'et s est donc fonction du poids de Hamming $H(d_{v-1}, d_{v-2}.... d_{v-s-1})$ de la partie de l'exposant $d$ déjà utilisée au cours des étapes précédentes du calcul d'exponentiation. Comme le poids de Hamming représente le nombre de bits à 1 de la fraction d'exposant considérée, $s'$ est par exemple égal à $s$ ou à $s+1$ si les bits $d_{v-1}$, $d_{v-2}$.... $d_{v-s-1}$ déjà utilisés de l'exposant sont tous égaux à zéro. Comme autre exemple, $s$'est égal à $2s$ ou à $2s+1$ si les bits $d_{v-1}$, $d_{v-2}$.... $d_{v-s-1}$ sont tous égaux à 1.

Une analyse SPA "idéale" devrait permettre de déterminer si chaque courbe $C_{s'}$ est relative au calcul de la multiplication LIM($a,a$) ou de la multiplication LIM($a,m$), par la seule observation de la forme de ces courbes, ce qui permettrait d'en déduire la valeur de chaque bit de l'exposant, suivant la méthode déductive rappelée plus haut. Toutefois, pour prévenir une telle fuite d'information ("leakage"), les circuits intégrés sécurisés de dernière génération sont équipés de contre-mesures qui brouillent leur consommation de courant.

Ainsi, l'analyse SPA permet généralement d'identifier les calculs effectués et les algorithmes implémentés par un circuit intégré, et de repérer, sur la courbe générale de consommation du circuit intégré, la portion de courbe relative au calcul d'exponentiation modulaire, mais ne permet pas vérifier des hypothèses sur l'opération précise que le circuit intégré exécute.

Des techniques d'analyse statistique, telles que les procédés DPA ("Differential Power Analysis") ou CPA ("Correlation Power Analysis"), ont donc été développées pour identifier la nature des opérations pendant lesquelles l'exposant est manipulé.

L'analyse DPA

Divulguée par Kocher, Jaffe et Jun (Réf. 2) et très étudiée depuis, l'analyse DPA peut permettre de retrouver la clé secrète d'un algorithme de cryptographie grâce à l'acquisition de nombreuses courbes de consommation. L'application de cette technique la plus étudiée jusqu'à ce jour concerne l'algorithme DES, mais cette technique s'applique aussi à d'autres algorithmes de chiffrement, déchiffrement ou signature et notamment au calcul d'exponentiation modulaire.

L'analyse DPA consiste en un classement statistique de courbes de consommation de courant, pour trouver l'information recherchée. Elle repose sur le postulat que la consommation d'un circuit intégré de technologie CMOS varie lorsqu'un bit passe de 0 à 1 dans un registre ou sur un bus, et ne varie pas lorsqu'un bit reste égal à 0, reste à égal 1 ou passe de 1 à 0 (décharge de la capacité parasite du transistor MOS). Alternativement, il peut être considéré que la consommation d'un circuit intégré de technologie CMOS varie lorsqu'un bit passe de 0 à 1 ou passe de 1 à 0 et ne varie pas lorsqu'un bit reste égal à 0 ou reste égal à 1. Cette seconde hypothèse permet d'utiliser les fonctions classiques "distance de Hamming" ou "poids de Hamming" pour élaborer un modèle de consommation qui ne nécessite pas de connaître la structure du circuit intégré pour être applicable.

L'analyse DPA vise à amplifier cette différence de consommation grâce à un traitement statistique portant sur de nombreuses courbes de consommation, visant à faire ressortir une corrélation entre les courbes de consommation mesurée et les hypothèses formulées.

Au cours de la phase d'acquisition de ces courbes de consommation, un système de test applique M messages aléatoires $m_0$, $m_1$, $m_2$,..., $m_r$... $m_{M-1}$ au circuit intégré, et fait en sorte que le circuit intégré calcule la transformée du message au moyen de sa fonction de cryptographie (ce qui est implicite ou nécessite l'envoi au circuit intégré d'une commande de chiffrage appropriée).

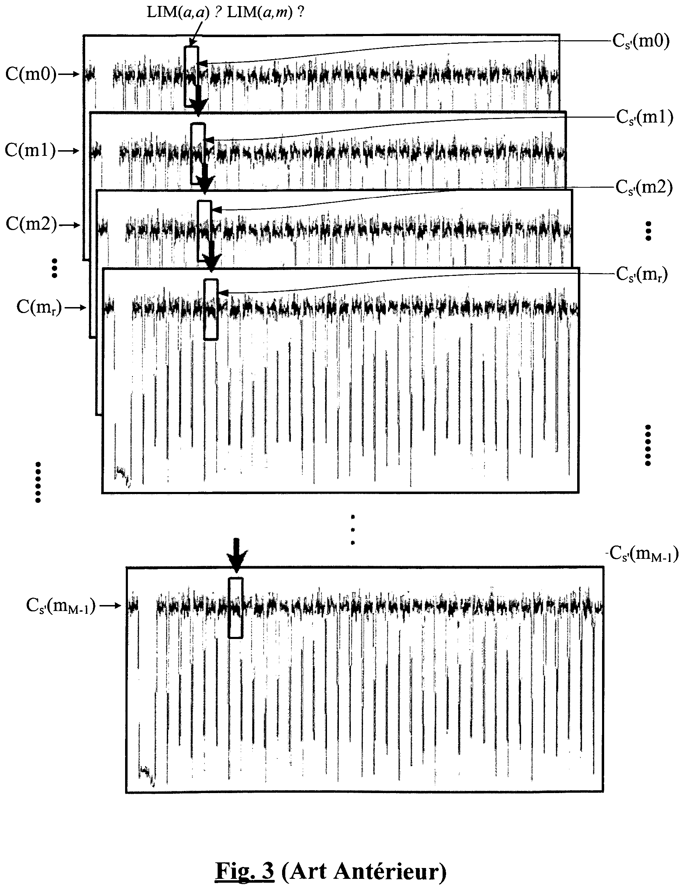

Comme illustré sur la figure 3, on collecte ainsi M courbes de consommation de courant C($m_0$), C($m_1$), C($m_2$)..., C($m_r$),..., C($m_{M-1}$). Chacune de ces courbes de consommation résulte des opérations que le circuit intégré exécute pour transformer le message au moyen de la fonction d'exponentiation modulaire, mais peut également résulter d'autres opérations que le circuit intégré peut exécuter en même temps.

Au sein de ces courbes de consommation, on isole, grâce à une analyse SPA, des courbes de consommation $C_s'(m_0)$, $C_s'(m_1)$, $C_s'(m_2)$..., $C_s'(m_r)$,..., $C_s'(m_{M-1})$, correspondant à des étapes d'exécution de l'algorithme d'exponentiation modulaire. Comme indiqué plus haut, chaque courbe de rang s'correspond à la "s$^{ième}$" exécution de l'étape 3 de l'algorithme, pour l'un des M messages, et met en jeu un bit de l'exposant $d$ dont on cherche à déterminer la valeur.

Au cours d'une phase de traitement statistique, le système de test estime la consommation de courant théorique HW($d_{v-s}$, $m_r$) du circuit intégré à l'étape du calcul considérée. Cette estimation de consommation est faite pour au moins l'une des deux valeurs possibles du bit recherché $d_s$ de l'exposant. Le système de test est par exemple configuré pour estimer la consommation théorique qu'implique l'exécution de la fonction LIM($a,m$), et ce pour toutes les valeurs $m_r$ du message $m$ utilisées pendant l'acquisition. Cette consommation théorique est par exemple estimée en calculant le poids de Hamming du résultat attendu au terme de l'exécution de l'opération correspondant à l'hypothèse considérée.

Sur la base de cette estimation de consommation de courant, le système de test classe les courbes de consommation en deux groupes G0 et G1 :

- G0 = {courbes $C_s'(m_r)$ correspondent à une faible consommation du circuit intégré à l'étape s considérée},
- G1 = {courbes $C_s'(m_r)$ qui devraient correspondre à une forte consommation du circuit intégré à l'étape $s$ considérée}.

Le système de test calcule ensuite la différence des moyennes des courbes des groupes G0 et G1, pour obtenir une courbe résultante, ou courbe différentielle statistique.

Si un pic de consommation apparaît sur la courbe différentielle statistique, à l'endroit choisi pour l'estimation de la consommation de courant, le système de test en déduit que l'hypothèse sur la valeur du bit $d_{v-s}$ est exacte, l'opération exécutée par l'algorithme d'exponentiation modulaire est donc ici LIM($a,m$). Si aucun pic de consommation n'apparaît, la différence des moyennes ne fait pas ressortir de différence de consommation significative (on obtient un signal assimilable à du bruit), et le système de test peut soit considérer que l'hypothèse complémentaire est vérifiée ($d_{v-s}$=0, l'opération exécutée est LIM($a,a$)), soit procéder d'une manière similaire pour vérifier cette hypothèse.

L'analyse DPA présente l'inconvénient d'être complexe à mettre en œuvre et de nécessiter la capture d'un très grand nombre de courbes de consommation de courant. De plus, il existe des contre-mesures hardwares telle que la prévision d'un balancement d'horloge ("jitter"), la génération de bruit de fond, etc., qui rendent souvent nécessaires la prévision d'étapes de traitement préalable du signal (recalage, synchronisation, réduction du bruit...) sur les courbes de consommation de courant dont on fait l'acquisition. Le nombre de courbes de consommation de courant à acquérir pour l'obtention de résultats fiables dépend également de l'architecture du circuit intégré étudié, et peut être de l'ordre du millier à la centaine de milliers de courbes.

L'analyse CPA

L'analyse par corrélation dite CPA ("Correlation Power Analysis") a été divulguée par Brier, Clavier et Olivier (Réf. 3). Les auteurs proposent un modèle linéaire de consommation de courant en supposant que le passage d'un bit de 1 à 0 consomme le même courant que le passage d'un bit de 0 à 1. Les auteurs proposent en outre de calculer un coefficient de corrélation entre, d'une part, les points de consommation mesurée qui forment les courbes de consommation capturées et, d'autre part, une valeur estimée de consommation, calculée à partir du modèle de consommation linéaire et d'une hypothèse sur l'opération qu'exécute le circuit intégré.

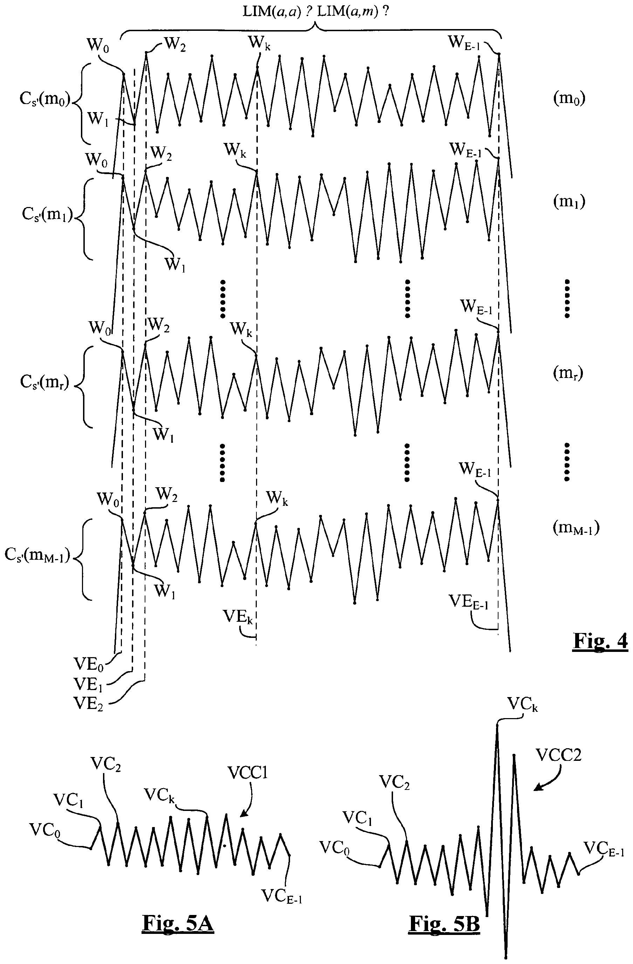

Les figures 4 et 5 illustrent un exemple d'analyse CPA appliquée à l'algorithme d'exponentiation modulaire. Dans cet exemple, le système de test cherche à savoir si à la s$^{ième}$ itération de l'étape 3 de l'algorithme d'exponentiation modulaire, l'opération qui est exécutée après l'opération LIM($a,a$) est de nouveau l'opération LIM($a,a$) (soit l'étape 3A de l'itération s+1 suivante) ou l'opération LIM($a,m$) (soit l'étape 3B de l'itération de rang s).

Comme représenté sur la figure 4, le système de test capture M courbes de consommation de courant $C_s'(m_r)$ ($C_s'(m_0)$, $C_s'(m_1)$,..., $C_s'(m_r)$,..., $C_s'(m_M)$) relatives à la même itération de l'algorithme, chacune correspondant à un message $m_r$ ($m_0$, $m_1$...$m_r$...$m_{M-1}$) qui a été envoyé au circuit intégré. Chaque courbe $C_s'(m_r)$ comprend E points de consommation de courant $W_0$, $W_1$, $W_2$,..., $W_i$,...,$W_{E-1}$ formant un premier ensemble de points. Les points d'une même courbe $C_s'(m_r)$ sont associés à une estimation de la consommation de courant.

A cet effet, la consommation de courant HW est par exemple modélisée comme suit :

$$W = k1*H(D \oplus R) + k2$$

"R" étant un état de référence du registre de calcul du circuit intégré, "D" étant la valeur du registre à la fin de l'opération considérée, k1 étant un coefficient de proportionnalité et k2 représentant le bruit et/ou un courant consommé qui n'est pas lié à H(D ⊕ R), la fonction "H" étant la distance de Hamming entre les valeurs R et D du registre, soit le nombre de bits différents entre D et R ("⊕" désignant la fonction Ou Exclusif).

Selon une approche simplificatrice, la valeur de référence R du registre est choisie égale à 0, de sorte que le calcul du point de consommation de courant estimée revient à calculer le poids de Hamming (nombre de bit à 1) du résultat de l'opération considérée. Ce résultat est par exemple "$a*m$" pour l'hypothèse considérée. Il en découle que le point de consommation estimée HW est égal à H($a*m$). L'hypothèse sur l'opération exécutée, par exemple LIM($a,m$), est donc transformée en une estimation de consommation de courant HW calculée en appliquant ce modèle de consommation linéaire.

Comme illustré sur la figure 4, le système de test regroupe ensuite les différents points $W_k$ de consommation de courant formant chaque courbe $C_{s'}$ dans des ensembles de points transversaux verticaux $VE_k$ ($VE_0$, $VE_1$, $VE_2$,..., $VE_k$,...$VE_{E-1}$) qui comprennent chacun les points $W_k$ de même rang k de chacune des courbes $C_{s'}$, chaque ensemble transversal vertical $VE_k$ étant repéré sur la figure par des traits pointillés verticaux contenant donc un nombre de points égal au nombre M de courbes utilisées pour l'analyse.

A chaque point $W_k$ d'un ensemble transversal vertical $VE_k$ est associé un point $HW_k$ de consommation de courant estimée, qui correspond à l'estimation de consommation associée à la courbe $C_{s'}(m_r)$ auquel le point appartient, calculée de la manière indiquée plus haut.

Pour chaque ensemble vertical transversal $VE_k$, le système de test calcule ensuite un coefficient de corrélation linéaire vertical $VC_k$ entre les points $W_k$ de l'ensemble considéré et points $HW_k$ de consommation estimée qui leur sont associés. Ce coefficient de corrélation est par exemple égal à la covariance entre l'ensemble des points de consommation mesurée $W_k$ de l'ensemble $VE_k$ et les points de consommation estimée $HW_k$ associés à ces points de consommation mesurée, divisé par le produit des écarts type respectifs de ces deux ensembles de points. Ainsi, à chaque ensemble de points transversal vertical $VE_k$ est associé un coefficient de corrélation vertical $VC_k$ correspondant à l'hypothèse évaluée.

Comme illustré sur les figures 5A, 5B, le système de test obtient ainsi un ensemble de coefficients de corrélation verticale $VC_0$, $VC_1$,..., $VC_k$,..., $VC_{E-1}$) qui forme une courbe de corrélation verticale VCC1 qui infirme l'hypothèse ou qui forme une courbe de corrélation verticale VCC2 qui confirme l'hypothèse. La courbe VCC2 présente un ou plusieurs pics de corrélation marqués (valeurs de la covariance normalisée proches de +1 ou -1), indiquant ainsi que l'hypothèse sur l'opération est juste. La courbe VCC1 ne comporte pas de pic de corrélation. Si la courbe de corrélation VCC2 est obtenue, le programme en déduit que le circuit intégré effectuait l'opération LIM($a,m$) lorsque les courbes $C_{s'}(m_0)$ à $C_{s'}(m_{M-1})$ ont été capturées, et en déduit donc que le bit $d_s$ de l'exposant d'exponentiation modulaire vaut 1.

## Le procédé Big Mac

Le procédé Big Mac a été divulgué par Colin D. Walter (Réf. 4, Réf 5). Ce procédé se base sur l'atomicité de la multiplication de grands entiers, mentionnée plus haut, à savoir le fait que l'exécution d'une opération de multiplication de deux grands entiers comprend l'exécution d'une pluralité de multiplications élémentaires $x_i*y_j$ de composantes $x_i$ et $y_i$ des opérandes x et y objet de la multiplication.

Le procédé Big Mac comprend des étapes consistant à

- combiner des sous-courbes de consommation correspondant aux multiplications élémentaires $x_i*y_j$ pour un $x_i$ donné fixe et pour un indice j variable, puis
- calculer la valeur moyenne des points de ces sous-courbes pour obtenir une sous-courbe résultante qui reflète les propriétés de $x_i$ de manière plus marquée que les propriétés de $y_j$,
- former un dictionnaire avec des sous-courbes moyennées,
- par la suite, identifier au moyen du dictionnaire de nouvelles sous-courbes issues de multiplications suivantes, pour en déduire la valeur des opérandes manipulés par les opérations de multiplication suivantes.

Le document WO 02/071687 A1 vise à protéger un circuit d'attaques par sonde sur le bus de données qui alimente un coprocesseur.

## Synthèse des procédés de test connus

Comme cela vient d'être vu, les procédés DPA et CPA nécessitent l'acquisition de nombreuses courbes de consommation de courant. Bien que les procédés CPA soient plus efficaces que les procédés DPA et ne nécessitent généralement qu'une centaine ou quelques centaines de courbes de consommation contre un millier à la centaine de milliers de courbes pour les procédés DPA, le nombre de courbes à acquérir pour mettre en œuvre un procédé CPA ne peut être considéré comme négligeable.

Les procédés DPA et CPA peuvent par ailleurs être contrés par des contre-mesures consistant à masquer le message $m$ et/ou masquer l'exposant $d$ au moyen de mots aléatoires. On a vu en effet que l'hypothèse de consommation liée à l'opération LIM($a,m$) nécessite de connaître le message $m$ pour calculer son poids de Hamming. Un masquage du message au moyen d'une donnée aléatoire ne permet plus d'associer une valeur de consommation estimée à une valeur de consommation mesurée, pour calculer le coefficient de pondération.

Enfin, le procédé Big Mac s'avère délicat à mettre en œuvre et nécessite une bonne connaissance de l'architecture du circuit intégré pour élaborer un dictionnaire comprenant les modèles nécessaires à sa mise en œuvre. Les résultats obtenus ont été estimés peu satisfaisants et le procédé ne semble pas faire l'objet d'applications pratiques connues.

L'invention est définie par les revendications indépendantes et vise un procédé de test de circuit intégré par canal auxiliaire applicable notamment mais non exclusivement au calcul d'exponentiation modulaire, qui soit simple à mettre en œuvre et nécessite un nombre réduit de courbes de consommation de courant, ou toute autre grandeur physique représentative de l'activité du circuit intégré.

La présente invention vise également un procédé de test par canal auxiliaire applicable à un circuit intégré exécutant une opération de multiplication de deux mots binaires x et y comprenant une pluralité d'étapes élémentaires de multiplication de composantes $x_i$ par des composantes $y_j$ des mots x et y.

La présente invention vise également un procédé de test par canal auxiliaire destiné à être intégré dans un processus industriel de qualification ou de certification de circuits intégrés, pour vérifier leur robustesse à des attaques par canal auxiliaire et leur étanchéité aux fuites d'information.

La présente invention concerne également des moyens de contre-mesure permettant à un circuit intégré d'être considéré comme apte à être utilisé, au terme d'un processus de qualification ou de certification incluant un procédé de test selon l'invention.

Plus particulièrement, des modes de réalisation de l'invention concernent un circuit intégré comprenant une fonction de multiplication configurée pour exécuter une opération de multiplication d'au moins deux mots binaires x et y en une pluralité d'étapes élémentaires de multiplication de composantes xi du mot x par des composantes yj du mot y, i et j étant des variables d'itération, dans lequel la fonction de multiplication est configurée pour exécuter deux multiplications successives de mots binaires x et y en modifiant de manière aléatoire ou pseudo-aléatoire l'ordre dans lequel des étapes élémentaires de multiplication des composantes xi par des composantes yj sont exécutées.

Selon un mode de réalisation, la fonction de multiplication est configurée pour modifier de manière aléatoire ou pseudo-aléatoire l'ordre dans lequel les composantes xi sont multipliées aux composantes yj sans modifier l'ordre dans lequel les composantes yj sont multipliées aux composantes xi, ou vice-versa.

Selon un mode de réalisation, la fonction de multiplication est configurée pour modifier de manière aléatoire ou pseudo-aléatoire à la fois l'ordre dans lequel les composantes xi sont multipliées aux composantes yj et l'ordre dans lequel les composantes yj sont multipliées aux composantes xi.

Selon un mode de réalisation, la fonction de multiplication comprend des moyens pour générer ou recevoir un nombre binaire aléatoire ou pseudo-aléatoire, et pour exécuter la pluralité d'étapes élémentaires de multiplication de composantes xi par des composantes yi, en ce qui concerne au moins l'une des variables d'itération i ou j, selon un ordre déterminé par le nombre binaire aléatoire ou pseudo-aléatoire.

Selon un mode de réalisation, la fonction de multiplication est également configurée pour randomiser au moins l'une des composantes xi ou yj au moyen d'au moins un mot aléatoire ou pseudo-aléatoire.

Selon un mode de réalisation, la fonction de multiplication comprend un mode de fonctionnement ordonné dans lequel les variables d'itération sont incrémentées ou décrémentées selon un ordre constant d'une multiplication de mots binaires à l'autre, et un mode de fonctionnement désordonné dans lequel au moins d'une des variables d'itération est incrémentée ou décrémentée de manière aléatoire ou pseudo-aléatoire d'une multiplication de mots binaires à l'autre.

Selon un mode de réalisation, la fonction de multiplication est exécutée par un circuit à logique câblée cadencé par un séquenceur.

Selon un mode de réalisation, le circuit intégré comprend une fonction de traitement d'une donnée externe dont l'exécution comprend au moins une étape de branchement conditionnel vers au moins une première étape de multiplication de mots binaires par la fonction de multiplication ou une seconde étape de multiplication de mots binaires par la fonction de multiplication, le branchement conditionnel étant fonction d'une donnée privée du circuit intégré.

Selon un mode de réalisation, la fonction de traitement de données est une fonction d'exponentiation modulaire, la donnée privée étant un exposant de la fonction d'exponentiation modulaire.

Selon un mode de réalisation, la fonction de traitement de données est une fonction de cryptographie incluant une fonction d'exponentiation modulaire, la donnée privée étant un exposant de la fonction d'exponentiation modulaire formant une clé privée de la fonction de cryptographie.

Des modes de réalisation de l'invention concernent également un dispositif comprenant un circuit intégré selon l'invention, agencé sur un support.

Des modes de réalisation de l'invention concernent également un procédé pour protéger contre une analyse par canal auxiliaire un circuit intégré configuré pour exécuter une opération de multiplication d'au moins deux mots binaires x et y en une pluralité d'étapes élémentaires de multiplication de composantes xi du mot x par des composantes yj du mot y, i et j étant des variables d'itération, le procédé comprenant une étape consistant à modifier de manière aléatoire ou pseudo-aléatoire l'ordre dans lequel le circuit intégré exécute des étapes élémentaires de multiplication des composantes xi par des composantes yj, d'une opération de multiplication de mots binaires à l'autre.

Selon un mode de réalisation, le procédé comprend une étape consistant à modifier de manière aléatoire ou pseudo-aléatoire l'ordre dans lequel le circuit intégré multiplie les composantes xi aux composantes yj, sans modifier l'ordre dans lequel les composantes yj sont multipliées aux composantes xi, ou vice-versa.

Selon un mode de réalisation, le procédé comprend une étape consistant à modifier de manière aléatoire ou pseudo-aléatoire à la fois l'ordre dans lequel le circuit intégré multiplie les composantes xi aux composantes yj et l'ordre dans lequel le circuit intégré multiplie les composantes yj aux composantes xi.

Selon un mode de réalisation, le procédé comprend les étapes consistant à générer un nombre binaire aléatoire ou pseudo-aléatoire au sein du circuit intégré, et faire exécuter par le circuit intégré la pluralité d'étapes élémentaires de multiplication de composantes xi par des composantes yi selon un ordre déterminé par le nombre binaire aléatoire ou pseudo-aléatoire, en ce qui concerne au moins l'une des variables d'itération i ou j.

Selon un mode de réalisation, le procédé comprend en outre une étape consistant à faire randomiser par le circuit intégré au moins l'une des composantes xi ou yj au moyen d'au moins un mot aléatoire ou pseudo-aléatoire.

Selon un mode de réalisation, le procédé est appliqué à la protection d'un circuit intégré comprenant une fonction de traitement d'une donnée externe dont l'exécution comprend au moins une étape de branchement conditionnel vers au moins une première étape de multiplication de mots binaires ou au moins une seconde étape de multiplication de mots binaires, le branchement conditionnel étant fonction d'une donnée privée du circuit intégré.

Des modes de réalisation du procédé de test selon l'invention et de contre-mesures correspondantes seront décrits dans ce qui suit à titre non limitatif, en relation avec les dessins annexés parmi lesquels :

- la figure 1 précédemment décrite représente une architecture classique de circuit intégré sécurisé,
- la figure 2 précédemment décrite représente une courbe de consommation de courant du circuit intégré pendant l'exécution d'un calcul d'exponentiation modulaire,
- la figure 3 précédemment décrite représente des courbes de consommation de courant utilisées pour conduire une analyse DPA ou CPA de type classique,
- la figure 4 précédemment décrite représente plus en détail des courbes de consommation de courant utilisées pour conduire une analyse CPA classique,
- les figures 5A, 5B représentent schématiquement des courbes de corrélation fournies par une analyse CPA classique,
- la figure 6 représente schématiquement un circuit conçu pour exécuter un algorithme classique de multiplication,
- la figure 7 représente schématiquement un exemple de réalisation d'un système de test selon l'invention,
- la figure 8 représente une courbe de consommation de courant comprenant des sous-courbes de consommation de courant utilisées par le système de test pour mettre en œuvre le procédé selon l'invention,
- la figure 9 est une vue plus détaillée des sous-courbes de consommation de courant et illustre une étape du procédé selon l'invention,
- la figure 10 est un tableau de valeurs estimées d'une grandeur physique associées à des points des sous-courbes de la figure 9,
- les figures 11A, 11B représentent schématiquement deux courbes de corrélation générées par un mode de réalisation du procédé de test selon l'invention,
- les figures 12A, 12B et 12C représentent respectivement deux courbes moyennées et une courbe de corrélation générées par un autre mode de réalisation du procédé de test selon l'invention,
- la figure 13 représente schématiquement un circuit multiplieur conçu pour exécuter un algorithme de multiplication selon l'invention, et
- la figure 14 représente une architecture de circuit intégré sécurisé comprenant un moyen de contre-mesure selon l'invention.

## Caractéristiques générales du procédé de l'invention

Des modes de réalisation du procédé de test selon l'invention reposent sur un examen détaillé de la consommation de courant d'un circuit intégré pendant l'exécution des étapes 3A et 3B de l'algorithme d'exponentiation, décrit plus haut, et plus particulièrement l'observation de sa consommation de courant pendant l'exécution de la multiplication LIM au cours de chacune de ces étapes 3A et 3B.

Le procédé selon l'invention se base sur le fait qu'en pratique, ces multiplications de grands entiers LIM($a,a$)

et LIM(*a,m*) ne sont pas faites en une seule étape en raison de la taille des mots binaire acceptés par l'organe qui effectue ces multiplications. L'organe qui exécute la multiplication est par exemple l'unité arithmétique et logique du microprocesseur, un coprocesseur ou un coprocesseur accélérateur mathématique. La taille réduite de l'organe de calcul nécessite de faire appel à un algorithme de calcul LIM(x,y) qui "découpe" les grands entiers x et y en *l* composantes de plus petite taille, telles que :

$$x = (x_{l-1} \ x_{l-2} \ldots \ x_0)b$$

$$y = (y_{l-1} \ y_{l-2} \ldots \ y_0)b$$

$x_{l-1}, x_{l-2} \ldots x_0$ et $y_{l-1}, y_{l-2} \ldots y_0$ étant les composantes des opérandes x et y en base "b", chaque composante comprenant N bits, la base b étant égale à $2^N$, par exemple b=$2^{32}$ pour un organe de calcul acceptant des opérandes de N=32 bits.

Ce fractionnement des opérandes en *l* parties égales fait que la multiplication comprend $l^2$ opérations de multiplications élémentaires, si la multiplication est faite selon la méthode scolaire. Le tableau 1 ci-dessous donne la relation entre la taille G des opérandes x et y, la taille N de leurs composantes $x_i$, $y_j$, le nombre I de composantes $x_i$, $y_j$ pour former un opérande, et le nombre $l^2$ de multiplications élémentaires $x_i * y_j$ que comprend l'exécution de la fonction LIM, pour quelques exemples caractéristiques d'architectures de circuits intégrés.

TABLEAU 1

| Taille G des opérandes x, y | Taille N des composantes $x_i$, $y_j$ | Nombre I de composantes $x_i$, $y_j$ par opérande (I=G/N) | Nombre $l^2$ de multiplications élémentaires $x_i * y_j$ pour obtenir x*y |
|---|---|---|---|
| 2048 bits | 32 bits | 64 | 4096 |
| 2048 bits | 64 bits | 32 | 1024 |
| 1536 bits | 32 bits | 48 | 2304 |
| 1536 bits | 64 bits | 24 | 576 |
| 1024 bits | 32 bits | 32 | 4096 |
| 1024 bits | 64 bits | 16 | 256 |

A chaque opération de multiplication élémentaire $x_i * y_j$ exécutée par l'algorithme de multiplication LIM correspond ainsi une sous-courbe de consommation de courant $C_{i,j}$, et ces sous-courbes forment ensemble la courbe de consommation de courant de l'étape 3A ou de l'étape 3B de l'algorithme d'exponentiation.

Le procédé selon l'invention prévoit d'appliquer à de telles sous-courbes des étapes de traitement statistique transversal horizontal, pour vérifier une hypothèse concernant les variables objet de la multiplication, et par là vérifier une hypothèse concernant un branchement conditionnel conduisant à exécuter l'opération de multiplication avec ces variables. Le procédé ne nécessite que l'acquisition d'une seule courbe de consommation, en adressant un seul message *m* à un circuit intégré.

Exemple de contexte de mise en œuvre du procédé de l'invention

Les modes de réalisation du procédé qui seront décrits dans ce qui suit visent à déterminer l'exposant secret utilisé par un circuit intégré pendant un calcul d'exponentiation modulaire. Le circuit intégré est par exemple le circuit intégré classique CIC1 décrit plus haut en relation avec la figure 1. Le calcul d'exponentiation modulaire est par exemple exécuté selon l'algorithme suivant, déjà décrit plus haut :

**Algorithme d'exponentiation**

**Entrée :**

*"m" et" n" des entiers tels que m < n*

*"d" un exposant de v bits tel que d = $(d_{v-1}\ d_{v-2}\ldots\ d_0)_2$*

**Sortie :** $a = m^d$ modulo $n$

**Étape 1 :** $a = 1$

**Étape 2 : Pré-calculs de la réduction de Barrett**

**Étape 3 :** pour $s$ allant de 1 à $v$ faire :

  **(Etape 3A)** $a = \mathrm{BRED}(\mathrm{LIM}(a,a),n)$

  **(Etape 3B)** si $d_{v-s} = 1$ alors $a = \mathrm{BRED}(\mathrm{LIM}(a,m),n)$

**Étape 4 :** Retourner résultat $a$

Comme indiqué plus haut, la découverte de l'exposant $d$ nécessite de déterminer si l'étape 3 de l'algorithme ne comprend que l'étape 3A ou comprend au contraire l'étape 3A suivi de l'étape 3B. En commençant par la première itération de l'étape 3 (s=1) et jusqu'à la dernière (s=v), le procédé selon l'invention permet de déterminer, avec une seule courbe de consommation de courant, si l'opération exécutée par le microprocesseur ou le coprocesseur est LIM($a,a$) ou de type LIM($a,m$) en se basant sur les sous-courbes de consommation correspondant à des multiplications élémentaires intervenant dans l'exécution de la multiplication LIM.

Il sera également supposé dans ce qui suit, toujours à titre d'exemple de mise en œuvre du procédé, que l'opération de multiplication LIM intervenant dans l'exécution de l'algorithme d'exponentiation modulaire est exécutée selon la méthode scolaire, soit la forme d'exécution la plus couramment utilisée de la multiplication de grands entiers, par exemple au moyen de l'algorithme suivant :

**Algorithme LIM – Multiplication LIM (méthode scolaire)**

**Entrées :**

$x = (x_{l-1},\ x_{l-2},\ldots\ x_0)b$

$y = (y_{l-1},\ y_{l-2},\ldots\ y_0)b$

**Sortie :** $R = \mathrm{LIM}(x,y) = x{*}y = (R_{2l-1}\ R_{2l-2}\ldots\ R_0)b$

**Étape 1 :**

Pour i allant de 0 à 2l-1 faire $R_i = 0$

**Étape 2 :**

Pour i allant de 0 à l-1 faire :

  $c \leftarrow 0$

  pour j allant de 0 à l-1 faire :

   $u|v \leftarrow (R_{i+j} + x_i{*}y_j) + c$

   $R_{i+j} \leftarrow v$ et $c \leftarrow u$

  $R_{i+l} \leftarrow v$

**Étape 3 :** Retourner($R$)

Dans lequel "|" désigne la concaténation des variables intermédiaires $u$ et $v$.

Ainsi, les $l^2$ étapes de calcul itératives faisant intervenir les composantes $x_i$, $y_j$ des grands entiers x, y permettent

d'obtenir $2l$ résultats intermédiaires $R_{2l-1}$, $R_{2l-2}$,....$R_0$ de N bits chacun qui sont concaténés dans un registre de sortie pour former le résultat final de la multiplication de x par y.

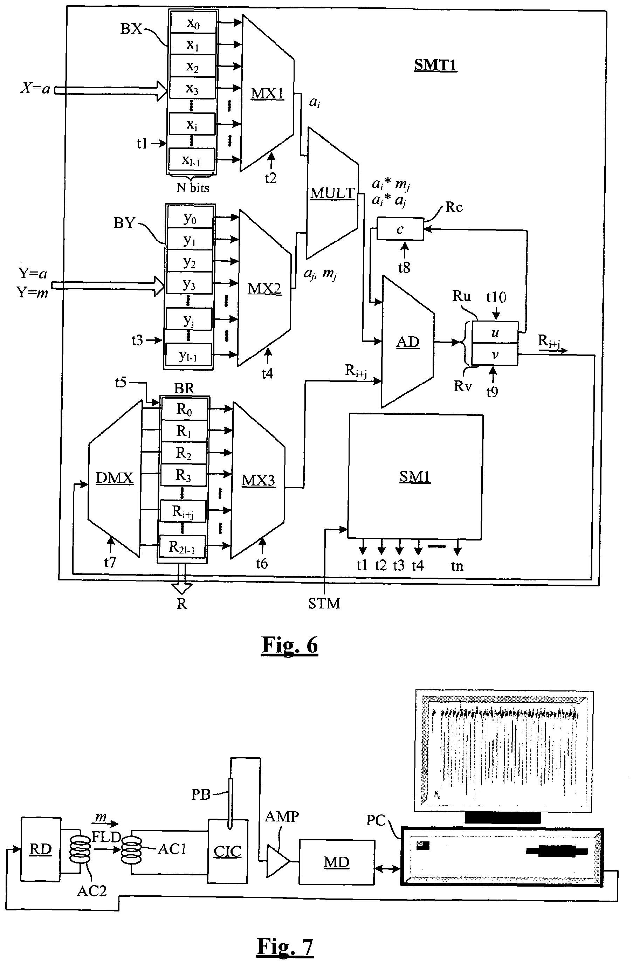

Pour fixer les idées, la figure 6 représente un exemple de multiplieur hardware SMT1 prévu pour effectuer la multiplication LIM de deux opérandes x et y selon l'algorithme ci-dessus. L'architecture du multiplieur est l'image de l'algorithme. Le multiplieur SMT1 comprend ainsi des tampons d'entrée BX, BY recevant des opérandes x et y de G bits, un tampon de sortie BR fournissant le résultat R, un multiplieur MULT à deux entrées de N bits et une sortie de 2N bits, un additionneur AD ayant une entrée de 2N bits, deux entrées de N bits et une sortie de 2N bits, un registre de sortie de 2N bits comprenant deux registres concaténés Ru et Rv de N bits chacun, pour recevoir les variables intermédiaires $u$ et $v$ de l'algorithme, un registre Rc pour recevoir le report de somme c de l'algorithme. Un séquenceur SM1, par exemple une machine d'états, fournit des signaux de contrôle t1, t2,..., t9, t10,...tn de ces divers éléments, et est configuré pour exécuter l'algorithme sur réception d'une commande STM ("Start Multiplication").

Le tampon BX comprend $l$ registre de N bits recevant chacun l'une des composantes $x_{l-1}$, $x_{l-2}$,..., $x_0$ de X. Le tampon BY comprend $l$ registre de N bits recevant chacun l'une des composantes $y_{l-1}$, $y_{l-2}$, ..... $y_0$ de y. Le tampon de sortie BR comprend $2l$ registres de N bits recevant chacun l'une des composantes $R_{2l-1}$, $R_{2l-2}$, ..... $R_0$ du résultat de la multiplication de x par y. Des multiplexeurs MX1, MX2 contrôlés par le séquenceur SM1 permettent d'appliquer l'une des composantes $x_i$ sur une entrée du multiplieur et l'une des composantes $y_i$ sur l'autre entrée du multiplieur, celui-ci fournissant le résultat $x_i*y_j$ sur 2N bits. La sortie de 2N bits du multiplieur MULT est reliée à l'entrée de 2N bits de l'additionneur AD. N premiers bits de la sortie de 2N bits de l'additionneur AD sont appliqués à l'entrée du registre Ru et les N autres bits sont appliqués à l'entrée du registre Rv. La sortie du registre Rv est appliquée à l'entrée de l'un des registres $R_{i+j}$ du tampon BR par l'intermédiaire d'un démultiplexeur DMX contrôlé par le séquenceur SM1. La sortie de l'un des registres $R_{i+j}$ du tampon BR est appliquée sur une entrée de N bits de l'additionneur par l'intermédiaire d'un multiplexeur MX3 contrôlé par le séquenceur SM1. L'autre entrée de N bits de l'additionneur est reliée à la sortie du registre Rc, dont l'entrée est reliée à la sortie du registre Ru. Le séquenceur SM1 contrôle l'écriture et la lecture de ces divers registres, pour l'exécution de l'algorithme.

Avant l'application de la commande STM, les données à multiplier $a$ et $a$ ou $a$ et $m$ sont enregistrées dans les tampons BX et BY en tant qu'opérandes x et y, selon que l'opération à exécuter est LIM($a,a$) ou LIM($a,m$). Dans le premier cas, les registres $x_i$ du tampon BX reçoivent des composantes $a_{l-1}$, $a_{l-2}$,.... $a_0$ de $a$ et les registres $y_j$ du tampon BY reçoivent ces mêmes composantes. Dans le second cas, les registres $x_i$ du tampon BX reçoivent les composantes $a_{l-1}$, $a_{l-2}$,..., $a_0$ de a et les registres $y_j$ du tampon BY reçoivent des composantes $m_{l-1}$, $m_{l-2}$,.... $m_0$ de $m$.

## Acquisition de sous-courbes de consommation de courant

La figure 7 illustre un exemple de système de test de circuit intégré prévu pour mettre en œuvre le procédé selon l'invention. Il sera supposé à titre d'exemple que le système de test est configuré pour tester le circuit intégré sans contact CIC1 de la figure 1.

Le système de test comporte un lecteur de carte à puce RD, ici un lecteur sans contact, une sonde de mesure PB reliée à un dispositif de mesure MD tel un oscilloscope numérique, pour acquérir les courbes de consommation du circuit intégré, et un moyen de calcul tel un ordinateur personnel PC. L'ordinateur est relié au dispositif de mesure et au lecteur de carte RD et met en œuvre un programme de test. Ce programme de test comprend notamment un programme pour communiquer avec le circuit intégré et lui adresser des messages, un programme de traitement de signal et un programme pour mettre en œuvre des étapes de calcul du procédé selon l'invention.

La sonde PB peut-être une sonde de courant (par exemple une résistance placée sur la borne d'alimentation Vcc du circuit intégré), ou une sonde électromagnétique reliée au dispositif de mesure par un amplificateur de signal AMP. Alternativement, une sonde de courant peut être combinée à une sonde électromagnétique. L'étude des rayonnements électromagnétiques EMA ("Electromagnetic Analysis") montre en effet qu'un rayonnement électromagnétique émis par un circuit en fonctionnement donne une information sur les commutations de bits dans le circuit intégré, à l'image de la mesure du courant consommé. L'avantage d'une sonde électromagnétique est qu'elle peut être placée à proximité de la partie de circuit dont on veut analyser le fonctionnement (par exemple à proximité du cœur du microprocesseur ou du coprocesseur de calcul cryptographique).

Par ailleurs, dans le cas d'un circuit intégré sans contact, la sonde de courant peut être remplacée par une sonde inductive qui mesure l'absorption, par le circuit intégré, du champ magnétique émis par le lecteur. Une telle sonde inductive, par exemple une bobine d'antenne, peut elle-même être combinée avec une sonde de champ électromagnétique placée à proximité des zones de circuit à étudier.

Ainsi, dans la présente demande, le terme "consommation de courant", utilisé dans un souci de simplification du langage, désigne toute grandeur physique mesurable dont les variations sont représentatives des commutations de données binaires au sein du circuit intégré ou au sein ou de la partie du circuit intégré étudiée, la grandeur physique pouvant être mesurée aux bornes du circuit intégré ou à proximité de la partie étudiée du circuit intégré.

La fréquence d'échantillonnage de la grandeur physique doit par ailleurs être suffisamment élevée pour collecter plusieurs points par sous-courbe, par exemple de 3 à 100 points par sous-courbe en pratique, mais il peut être envisagé de collecter jusqu'à plusieurs milliers de points par sous-courbe.

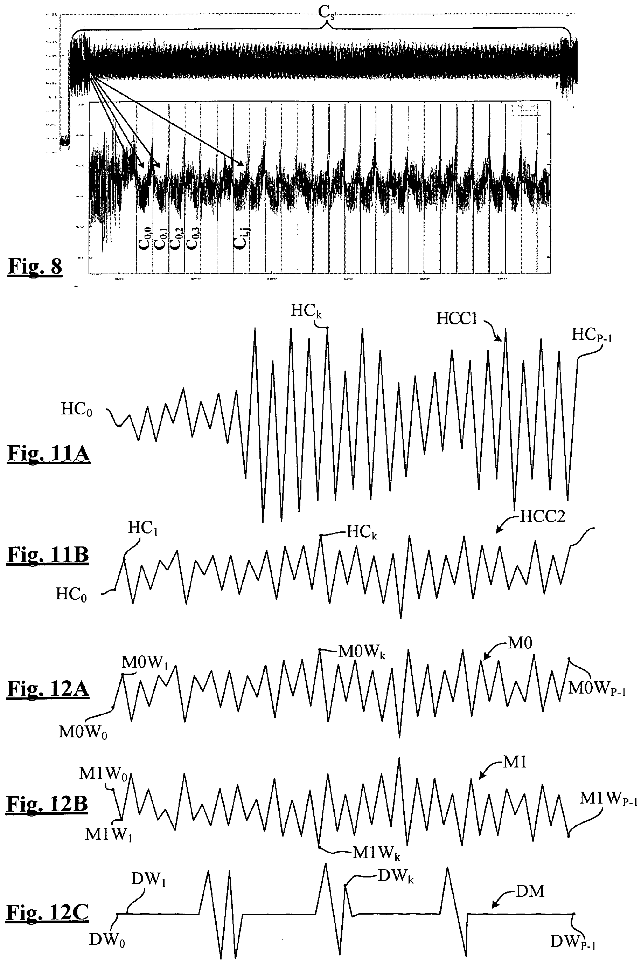

Comme représenté sur la figure 8, l'analyse fine de la courbe de consommation de courant $C_s$ lors de l'exécution de chaque itération de l'étape 3 de l'algorithme d'exponentiation fait donc apparaître des sous-courbes de consommation de courant $C_{i,j}$ correspondant chacune à l'exécution de l'étape 3A ou de l'étape 3B de l'algorithme LIM. L'identification du groupe de sous-courbes au sein de la courbe générale de consommation de courant est faite en faisant appel dans un premier temps à un technique classique d'analyse SPA. La première identification est faite manuellement, pendant une phase de mise au point du programme de test, les identifications suivantes peuvent être automatisées en fournissant au programme de test un point de repère temporel pour le repérage des sous-courbes.

Une fois cette première étape passée, le programme de test dispose des sous-courbes suivantes :

$$C_{0,0} = \text{sous-courbe de consommation du calcul } a_0{}^*a_0 \text{ ou } a_0{}^*m_0,$$

$$C_{0,1} = \text{sous-courbe de consommation du calcul } a_0{}^*a_1 \text{ ou } a_0{}^*m_1$$

$$\dots$$

$$C_{0,l-1} = \text{sous-courbe de consommation du calcul } a_0{}^*a_{l-1} \text{ ou } a_0{}^*m_{l-1}$$

$$\dots$$

$$C_{1,0} = \text{sous-courbe de consommation du calcul } a_1{}^*a_0 \text{ ou } a_1{}^*m_0$$

$$C_{1,1} = \text{sous-courbe de consommation du calcul } a_1{}^*a_1 \text{ ou } a_1{}^*m_1$$

$$\dots$$

$$C_{1,l-1} = \text{sous-courbe de consommation du calcul } a_1{}^*a_{l-1} \text{ ou } a_1{}^*m_{l-1}$$

$$\dots$$

$$C_{i,0} = \text{sous-courbe de consommation du calcul } a_i{}^*a_0 \text{ ou } a_i{}^*m_0$$

$$C_{i,1} = \text{sous-courbe de consommation du calcul } a_i{}^*a_1 \text{ ou } a_i{}^*m_1$$

$$\dots$$

$$C_{1,l-1} = \text{sous-courbe de consommation du calcul } a_i{}^*a_{l-1} \text{ ou } a_i{}^*m_{l-1}$$

$$C_{l-1,0} = \text{sous-courbe de consommation du calcul } a_{l-1}{}^*a_0 \text{ ou } a_{l-1}{}^*m_0$$

$$C_{l-1,1} = \text{sous-courbe de consommation du calcul } a_{l-1}{}^*a_1 \text{ ou } a_{l-1}{}^*m_1$$

$$\dots$$

$$C_{l-1,l-1} = \text{sous-courbe de consommation du calcul } a_{l-1}{}^*a_{l-1} \text{ ou } a_{l-1}{}^*m_{l-1}$$

Le programme de test dispose donc de $l^2$ sous-courbes $C_{0,0}$ à $C_{l-1,l-1}$ (Cf. tableau 1). Le programme de test applique ensuite un procédé de type DPA ou CPA à cet ensemble de sous-courbes, pour déterminer si l'opération réalisée par l'algorithme est du type $a_i{}^*a_j$ ou du type $a_i{}^*m_j$.

Le procédé de test selon l'invention peut donc être qualifié "d'horizontal", par contraste avec les procédés de test classiques DPA ou CPA qui nécessitent une superposition de courbes de consommation de courant, et peuvent être qualifiés de "verticaux".

Mise en œuvre du procédé au moyen d'une analyse de type CPA

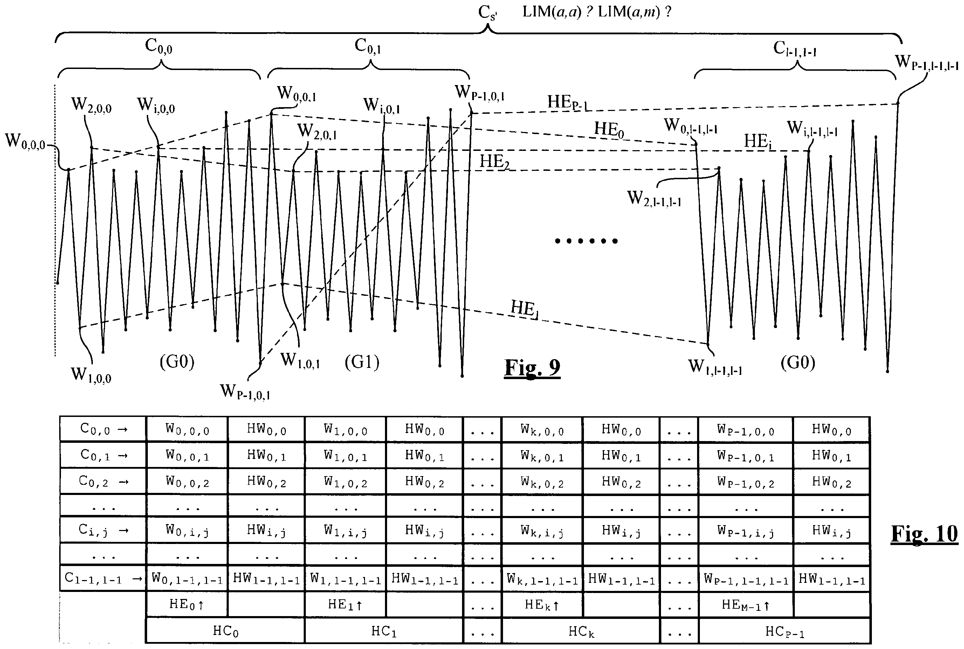

La figure 9 représente partiellement les $l_2$ sous-courbes de consommation de courant $C_{i,j}$ ($C_{0,0}$, $C_{0,1}$,..., $C_{i,j}$,..., $C_{l-1,l-1}$) d'une courbe $C_s$, relative à l'exécution d'une multiplication.

Les sous-courbes $C_{i,j}$ sont utilisées pour déterminer si l'algorithme d'exponentiation modulaire a demandé à l'algorithme de multiplication d'exécuter l'opération $a{}^*a$ ou l'opération $a{}^*m$, ce qui va se traduire à l'échelle de l'algorithme de multiplication par l'exécution de $l^2$ opération $a_i{}^*a_j$ ou de $l^2$ opérations $a_i{}^*m_j$.

En effet, si l'algorithme LIM est appelé par l'étape 3A de l'algorithme d'exponentiation, les entrées de l'algorithme

sont :

$$x = a = (a_{l-1}\ a_{l-2}.... \ a_0)b$$

$$y = a = (a_{l-1}\ a_{l-2}.... \ a_0)b$$

et l'étape 2 de l'algorithme LIM comprend alors le calcul suivant :

- pour j allant de 0 à I-1 faire : $u|v \leftarrow (R_{i+j} + a_j{}^*a_i) + c$

Si par contre l'algorithme LIM est appelé à l'étape 3B de l'algorithme d'exponentiation, les entrées de l'algorithme sont :

$$x = a = (a_{l-1}\ a_{l-2}.... \ a_0)b$$

$$y = m = (m_{l-1}\ m_{l-2}.... \ m_0)b$$

et l'étape 2 de l'algorithme LIM comprend alors le calcul suivant :

- pour j allant de 0 à I-1 faire : $u|v \leftarrow (R_{i+j} + a_j{}^*m_i) + c$

Chaque sous-courbe $C_{i,j}$ est formée par P points de consommation de courant $W_{0,i,j}$, $W_{1,i,j}$, $W_{2,i,j}$,..., $W_{k,i,j}$....$W_{P-1,i,j}$ et forme un sous-ensemble de points. Il sera noté que les points considérés ici sont ceux qui vont être utilisés dans le calcul de corrélation qui suit. En effet, en pratique, selon la fréquence d'échantillonnage avec laquelle les points de consommation de courant sont capturés, chaque sous-courbe pourrait comporter un plus grand nombre de points que ceux utilisés pour les calculs.

Le programme de test associe les points d'une même sous-courbe $C_{i,j}$ à au moins une hypothèse concernant l'opération exécutée par le circuit intégré, choisie entre deux hypothèses possibles, la première étant que le circuit intégré calcule $a_i{}^*a_j$ et la deuxième que le circuit intégré calcule $a_i{}^*m_j$.

Suivant les principes de l'analyse CPA rappelés plus haut, le programme de test utilise ensuite un modèle linéaire de consommation de courant pour transformer une hypothèse sur l'opération exécutée par le circuit intégré en une valeur estimée de consommation de courant correspondante, ou "modèle de corrélation". Selon une approche simplificatrice, le programme de test peut être configuré pour déterminer la valeur estimée de consommation de courant en calculant le poids de Hamming (nombre de bit à 1) de la variable la plus significative de l'opération considérée, ou d'une combinaison des variables les plus significatives.

On supposera à titre d'exemple que le programme de test cherche à vérifier l'hypothèse $a_i{}^*m_j$. La valeur $HW_{i,j}$ de consommation de courant estimée pour cette hypothèse est alors calculée au moyen de la relation suivante :

$$HW_{i,j} = H(m_j)$$

D'autres variantes de ce modèle peuvent être prévues, par exemple :

$$HW_{i,j} = H(a_i{}^*m_j)$$

Un modèle plus complexe peut également être utilisé, tel que :

$$HW_{i,j} = H(\alpha{}^*a_i + \beta{}^*m_j)$$

où $\alpha$ et $\beta$ sont des coefficients de pondération à fixer en fonction du microprocesseur ou du coprocesseur qui exécute la multiplication, après une analyse de caractérisation de celui-ci.

Il convient par contre de noter que le modèle $HW_{i,j} = H(a_i)$ n'est pas utilisable pour vérifier l'hypothèse $a_i{}^*m_j$

car le terme $a_i$ est présent dans les deux hypothèses $a_i*a_j$ et $a_i*m_j$ et n'est donc pas un discriminant valable.

Il apparaîtra clairement à l'homme de l'art que tout autre modèle statistiquement valable peut être utilisé pour estimer la consommation électrique, notamment des modèles plus complexes dans lesquels la valeur du registre de calcul du circuit intégré n'est pas considérée comme constante mais dépendante des opérations précédentes et de la structure du circuit.

Sur la base du modèle qui lui a été fourni, le programme de test est en mesure de calculer les valeurs de consommation estimée $HW_{i,j}$ puisque toutes les composantes $a_i$ de la variable a et toutes les composantes $m_j$ du message m sont connues. La valeur de la variable a est déduite des itérations précédentes pour lesquelles le programme de test a découvert la valeur des bits de l'exposant d, ou est égale à 1 s'il s'agit de la première itération de l'algorithme d'exponentiation modulaire. La valeur de m est connue puisque le message a été généré et envoyé par le programme de test.

Comme illustré sur la figure 9, le programme de test définit des ensembles de points transversaux horizontaux $HE_k$ ($HE_0$, $HE_1$, $HE_2$,..., $HE_k$,...$HE_{P-1}$) comprenant chacun les points $W_{k,i,j}$ de même rang k pris dans chacune des sous-courbes $C_{i,j}$. Chaque ensemble transversal horizontal $HE_k$ est repéré sur la figure par des traits pointillés et contient donc un nombre de points égal au nombre $l^2$ d'opérations de multiplications élémentaires $a_i*m_j$.

A chaque point $W_{k,i,j}$ d'un ensemble transversal horizontal $HE_k$ est associé un point $HW_{i,j}$ de consommation de courant estimée, correspondant à l'hypothèse sur la consommation estimée en relation avec la courbe $C_{i,j}$ auquel le point appartient, et calculé de la manière indiquée plus haut.

Pour chaque ensemble horizontal transversal $HE_k$, le programme de test calcule un coefficient de corrélation horizontal $HC_k$ entre les points $W_{k,i,j}$ de l'ensemble considéré et les points $HW_{i,j}$ de consommation estimée qui leur sont associés. Le coefficient de corrélation $HC_k$ est par exemple calculé au moyen de la relation suivante :

$$HC_k = \frac{\text{cov}(W_{k,i,j}, HW_{i,j})}{\sigma_{Wk,i,j}\sigma_{HWi,j}}$$

ou :

$$HC_k = \frac{l^2 \sum (W_{k,i,j} HW_{i,j}) - \sum W_{k,i,j} \sum HW_{i,j}}{\sqrt{l^2 \sum W_{k,i,j}^2 - (\sum W_{k,i,j})^2} \sqrt{l^2 \sum HW_{i,j}^2 - (\sum HW_{i,j})^2}}$$

soit la covariance entre les points $W_{k,i,j}$ et les points $HW_{i,j}$, normalisée par le produit de leurs écarts types $\sigma(W_{k,i,j})$ et $\sigma(HW_{i,j})$, $HC_k$ étant ainsi compris entre -1 et +1.

Ainsi, comme le montre le tableau 2 ci-dessous, également représenté sur la figure 10, à chaque ensemble de points transversal horizontal $HE_k$ est associé un coefficient de corrélation horizontal $HC_k$ correspondant à l'hypothèse devant être vérifiée.

TABLEAU 2

| $C_{0,0} \rightarrow$ | $W_{0,0,0}$ | $HW_{0,0}$ | $W_{1,0,0}$ | $HW_{0,0}$ | ... | $W_{k,0,0}$ | $HW_{0,0}$ | ... | $W_{P-100}$ | $HW_{0,0}$ |
|---|---|---|---|---|---|---|---|---|---|---|
| $C_{0,1} \rightarrow$ | $W_{0,0,1}$ | $HW_{0,1}$ | $W_{1,0,1}$ | $HW_{0,1}$ | ... | $W_{k,0,1}$ | $HW_{0,1}$ | ... | $WP_{-1,0,1}$ | $HW_{0,1}$ |
| $C_{0,2} \rightarrow$ | $W_{0,0,2}$ | $HW_{0,2}$ | $W_{1,0,2}$ | $HW_{0,2}$ | ... | $W_{k,0,2}$ | $HW_{0,2}$ | ... | $W_{P-1,0,2}$ | $HW_{0,2}$ |
| ... | ... | ... | ... | ... | ... | ... | ... | ... | ... | ... |
| $C_{i,j} \rightarrow$ | $W_{0,i,j}$ | $HW_{i,j}$ | $W_{1,i,j}$ | $HW_{i,j}$ | ... | $W_{k,i,j}$ | $HW_{i,j}$ | ... | $W_{P-1,i,j}$ | $HW_{i,j}$ |
| ... | ... | ... | ... | ... | ... | ... | | ... | ... | ... |
| $C_{I-1,I-1} \rightarrow$ | $W_{0,I-1I-1}$ | $HW_{I-1,I-1}$ | $W_{1,I-1,I-1}$ | $HW_{I-1,I-1}$ | ... | $W_{k,I-1,I-1}$ | $HW_{I-1,I-1}$ | ... | $W_{P-1,I-1,I-1}$ | $HW_{I-1,I-1}$ |
| | $HE_0\uparrow$ | | $HE_1\uparrow$ | | ... | $HE_k\uparrow$ | | ... | $HE_{M-1}\uparrow$ | |
| | $HC_0$ | | $HC_1$ | | ... | $HC_k$ | | ... | $HC_{P-1}$ | |

Comme illustré sur les figures 11A, 11B, le programme de test obtient ainsi une courbe de corrélation horizontale HCC1 qui confirme l'hypothèse étudiée, ou une courbe de corrélation horizontale HCC2 qui infirme l'hypothèse, la courbe HCC1 ou HCC2 étant formée par les coefficients de corrélation $HC_0$, $HC_1$,..., $HC_k$,..., $HC_{P-1}$. La courbe HCC1 présente un ou plusieurs pics de corrélation (valeurs proches de +1 ou -1) tandis que la courbe HCC2 ne présente pas de pics de corrélation.

La confirmation de l'hypothèse étudiée comprend par exemple la recherche, par le programme de test, d'au moins un pic de corrélation. La recherche de ce pic de corrélation comprend la recherche d'au moins un coefficient de corrélation dont la valeur absolue est comprise entre une valeur minimale de corrélation $HC_{min}$ et 1, la valeur minimale de corrélation étant choisie suffisamment proche de 1 pour qu'une corrélation existe.

Si l'hypothèse selon laquelle l'opération exécutée est $a_i^*m_j$ est confirmée par les pics de corrélation, le programme de test en déduit que le circuit intégré effectuait l'opération $a_i^*m_j$ lorsque les sous-courbes $C_{0,0}$ à $C_{l-1,l-1}$ de la courbe $C_{s'}$ ont été capturées, et que le bit $d_s$ de l'exposant d'exponentiation modulaire vaut 1 (la relation entre s' et s a été indiquée plus haut).

Il sera noté que le fait que la courbe de corrélation HCC1 correspondant à l'hypothèse exacte ne présente pas des pics de corrélation pour chaque point de consommation mesurée, signifie que certains points de consommation ne sont pas liés à l'exécution de l'opération étudiée mais sont liés à une autre activité que le circuit intégré peut conduire en même temps que l'exécution de l'algorithme.

Le programme de test peut par ailleurs être configuré pour analyser également l'hypothèse complémentaire, à savoir $a_i^*a_j$, notamment si la première hypothèse s'avère inexacte, et ainsi rechercher au moins un pic de corrélation pour décider si cette autre hypothèse est exacte ou non.

Alternativement, le programme de test peut être configuré pour considérer que l'hypothèse complémentaire est exacte si la première hypothèse n'est pas confirmée par la courbe de corrélation. Il apparaît qu'après une période de mise au point du programme de test et de recherche du meilleur estimateur de la consommation de courant, le programme de test devient fiable de sorte qu'il n'est plus nécessaire de vérifier les deux hypothèses.

Dans une variante, l'hypothèse $a^*m$ peut également être vérifiée plusieurs fois par le programme de test en utilisant plusieurs modèles de corrélation tels que $H(m_j)$ et $H(a_i^*m_j)$.

Dans une autre variante, la vérification que l'hypothèse $a^*m$ est exacte pour une sous-courbe $C_{s'}$ de rang s' peut être faite en se référant aux points de la sous-courbe suivante $C_{s'+1}$, puisqu'en raison de la structure même de l'algorithme d'exponentiation modulaire, le résultat de l'itération précédente est inclus dans la variable a de l'itération suivante. Dans ce cas, et contrairement à ce qui est indiqué plus haut, le terme $a_i$ peut être un discriminant valable pour l'estimation de la consommation de courant.

## Mise en œuvre du procédé au moyen d'une technique d'analyse différentielle de type DPA

Les $l^2$ sous-courbes de consommation horizontales $C_{i,j}$ peuvent également permettre de mettre en œuvre une analyse statistique de type DPA.

L'analyse nécessite une étape d'acquisition et une étape de traitement. L'étape d'acquisition ne comprend que l'acquisition d'une seule courbe de consommation $C_{s'}$, incluant les sous-courbes $C_{i,j}$. Il est à noter que cette acquisition pourrait, dans certains cas, être combinée avec une acquisition verticale, nécessitant l'envoi de plusieurs messages au circuit intégré. Toutefois, en raison du grand nombre de sous-courbes qu'offre le procédé selon l'invention (Cf. tableau 1 plus haut), le nombre d'acquisitions verticales demeure réduit relativement au nombre d'acquisitions verticales que nécessite un procédé DPA ou CPA classique.

L'étape de traitement statistique d'une courbe $C_{s'}$ (Fig. 9) est conduite par le programme de test en appliquant une méthodologie DPA classique, mais en considérant les sous-courbes horizontales $C_{i,j}$ comme des courbes indépendantes devant être classées.

Le programme de test estime la consommation de chaque étape de calcul correspondant à chaque sous-courbe en utilisant un modèle de consommation similaire à celui utilisé pour l'analyse CPA. Plus particulièrement, une fonction de tri $f(a_i,m_j)$ des sous-courbes est utilisée par le programme de test, par exemple :

$f(a_i,m_j)$ = poids de Hamming d'un ou plusieurs bits de $m_j$, ou
$f(a_i,m_j)$ = poids de Hamming d'un ou plusieurs bits de $a_i^*m_j$, ou
$f(a_i,m_j)$ = poids de Hamming d'un ou plusieurs bits de $a_i$ et d'un ou plusieurs bits de $m_j$.

Le programme classe ensuite les sous-courbes de consommation mesurée $C_{i,j}$ en deux groupes G0 et G1, pour l'hypothèse considérée :

- G0 = {sous-courbes $C_{i,j}$ qui devraient correspondre à une faible consommation du circuit intégré à l'étape $a_i^*m_j$ considérée},
- G1 = {sous-courbes $C_{i,j}$ qui devraient correspondre à une forte consommation du circuit intégré à l'étape $a_i^*m_j$ considérée}.

Par exemple, comme montré sur la figure 9, les sous-courbes $C_{0,0}$ et $C_{I-1,I-1}$ représentées sur cette figure sont classées dans le groupe G0 tandis que la sous-courbe $C_{0,1}$ est classée dans le groupe G1.

Le programme calcule ensuite :

- une première courbe moyennée M0 représentée schématiquement sur la figure 12A, dont chaque point $MOW_k$ de rang k ($MOW_0$, $MOW_1$,..., $MOW_k$,..., $MOW_{P-1}$) est égal la moyenne des points $W_{k,i,j}$ de même rang k de toutes les sous-courbes $C_{i,j}$ du groupe G0,.
- une seconde courbe moyennée M1 représentée schématiquement sur la figure 12B, dont chaque point $M1W_k$ de rang k ($M1W_0$, $M1W_1$,..., $M1W_k$,..., $M1W_{P-1}$) est égal la moyenne des points $W_{k,i,j}$ de même rang k de toutes les sous-courbes $C_{i,j}$ du groupe G1,
- une courbe différentielle statistique DM représentée schématiquement sur la figure 12C, ou courbe de la différence des moyennes, dont chaque point $DW_k$ de rang k ($DW_0$, $DW_1$,..., $DW_k$,..., $DW_{P-1}$) est égal à la différence des points $MOW_k$ et $M1W_k$ de même rang k des courbes moyennées M0 et M1.

Si un pic ou plusieurs pics de consommation de courant apparaissent sur la courbe différentielle statistique DM, à l'endroit choisi pour l'estimation de la consommation de courant, le programme en déduit que l'hypothèse sur la valeur du bit de l'exposant est exacte, l'opération exécutée par l'algorithme d'exponentiation modulaire est donc LIM($a,m$). Si aucun pic de consommation n'apparaît, le programme peut considérer que l'hypothèse complémentaire est vérifiée ($d_{v-s}$=0) et que l'opération exécutée est LIM($a,a$)), ou procéder d'une manière similaire pour vérifier l'hypothèse complémentaire.

La recherche d'un pic de consommation par le programme de test, qui est équivalente à la recherche d'un pic de corrélation avec la méthode précédente, comprend par exemple la recherche de points de consommation différentiels $DW_k$ de valeur supérieure ou égale à une valeur minimale de consommation $DW_{min}$.

Champs d'application du procédé de test selon l'invention

Il apparaîtra clairement à l'homme de l'art que le procédé selon l'invention permet de tester des circuits intégrés mettant en œuvre diverses sortes d'algorithmes, de cryptographie ou non, d'exponentiation modulaire ou non, si de tels algorithmes comprennent un branchement conditionnel conduisant à exécuter des opérations de multiplication portant sur différentes opérandes.

Fondamentalement, le procédé de l'invention permet de tester des circuits intégrés mettant en œuvre tout type d'algorithme de multiplication comprenant une pluralité de multiplications élémentaires $x_i{}^*y_j$, tels que la multiplication de COMBA ou de KARATSUBA, en relation avec un algorithme de niveau supérieur faisant appel à l'algorithme de multiplication par l'intermédiaire d'un branchement conditionnel. Le procédé de l'invention s'applique également à des circuits intégrés utilisant une fonction de multiplication modulaire incluant une fonction de réduction en sus d'une fonction de multiplication, telle que par exemple l'algorithme de Montgomery, de Quisquater, la multiplication ZDN de Sedlak, qui comprennent également une pluralité de multiplications élémentaires $x_i{}^*y_j$.

Le procédé selon l'invention permet ainsi d'évaluer des hypothèses sur le branchement conditionnel, pour en déduire une donnée secrète dont le branchement conditionnel dépend.

Le procédé de l'invention permet donc de réaliser des systèmes de test pour la qualification ou la certification de circuits intégrés, lesquels sont rejetés comme inaptes à conserver un secret si celui-ci est révélé par le procédé selon l'invention.

Efficacité des contre-mesures classiques vis-à-vis du procédé de test selon l'invention

Pour que les circuits intégrés puissent passer avec succès les procédures de qualification ou de certifications connues, les concepteurs de circuits intégrés prévoient des contre-mesures dont les plus courantes sont les suivantes :

i) Randomisation de l'exposant $d$ :
On remplace l'exposant $d$ par un exposant aléatoire $d'$ tel que :

$$d' = d + K$$

avec K un multiple de l'ordre du groupe multiplicatif dans lequel sont effectués les calculs. Dans le cas par exemple de l'algorithme RSA, K= k*$\varphi(n)$, avec k un nombre aléatoire et $\varphi$ la fonction d'Euler, telle que $\varphi(n) = (p-1)^*(q-1)$, p et q des entiers tels que $p^*q=1$.

ii) Randomisation additive du message $m$ et du module d'exponentiation $n$ :

On transforme le message reçu *m* en un message *m*\*tel que :

$$m* = m + r1*n \text{ modulo } r2*n$$

soit :

$$m = m + u*n$$

avec *u = r1 modulo r2,*
*r1, r2* étant des nombres aléatoires qui sont différents à chaque nouveau cycle de calcul cryptographique.

iii) Randomisation multiplicative du message *m* :
On transforme le message reçu *m* en un message *m*\*tel que :

$$m* = r^e *m \text{ modulo } m$$

avec *r* un nombre aléatoire et *e* un exposant public.

Il apparaît que la contre-mesure i) est sans effet sur le procédé de test selon l'invention, et permet seulement de contrer les analyses verticales DPA et CPA. Le procédé selon l'invention ne nécessite en effet qu'une seule courbe de consommation et permet de découvrir un exposant *d'* qui, bien qu'étant dérivé de l'exposant initial *d*, est utilisable en tant que clé secrète au même titre que l'exposant initial, pour exécuter l'exponentiation modulaire.

Concernant les contre-mesures ii) et iii), il apparaît également que le procédé de test selon l'invention, du fait qu'il repose sur le traitement statistique transversal horizontal d'une seule courbe de consommation liée à un seul message, au lieu d'un traitement statistique transversal vertical portant sur plusieurs courbes de consommation liées à un plusieurs messages, permet de percer de telles contre-mesures, en introduisant dans l'hypothèse des hypothèses sur la valeur du message randomisé. Ces contre-mesures multiplient le nombre d'hypothèses à traiter et ralentissent l'exécution du procédé de l'invention mais n'empêchent pas de déterminer quelle est l'opération exécutée par le circuit intégré, à moins que le nombre d'hypothèses à traiter soit trop important.

Contre-mesures appropriées

Un aspect de l'invention concerne la prévision de moyens de contre-mesure permettant à un circuit intégré d'être considéré comme apte à être utilisé au cours d'un test de qualification ou de certification incluant le procédé de l'invention.

On propose ici de protéger un algorithme de multiplication contre une analyse horizontale selon l'invention en randomisant l'ordre d'exécution des multiplications élémentaires $x_i*y_j$. Cette randomisation comprend soit la randomisation de l'ordre de traitement des $x_i$ tout en conservant l'ordre de traitement des $y_j$ pour chaque $x_i$ choisi (randomisation partielle), soit la randomisation de l'ordre de traitement des $x_i$ et de l'ordre de traitement des $y_j$ (randomisation totale).

A titre d'exemple de randomisation partielle, la séquence de multiplication suivante :

$$x_i*y_0 - x_i*y_1 - x_i*y_3 - x_i*y_4 \dots x_i*y_{l-1}$$

devient par exemple (aléatoirement) :

$$x_i*y_{15} \ x_i*y_5 \ x_i*y_{18} \ x_i*y_{l-1} \dots x_i*y_2$$

Si la randomisation est totale, toutes les séquences de multiplication $x_i*y_j$ sont exécutées dans le désordre.

**Exemple d'algorithme LIM randomisé (randomisation partielle)**

**Entrées :**

$x = (x_{l-1}, x_{l-2}, \ldots x_0)b$

$y = (y_{l-1}, y_{l-2}, \ldots y_0)b$

**Sortie :** $R = \mathrm{LIM}(x,y) = x{*}y = (R_{2l-1}\, R_{2l-2} \ldots R_0)b$

**Étape 1 :**

*Calculer ou recevoir un vecteur de permutation α tel que*

$α = (α_{l-1}, α_{l-2}, \ldots α_0)$

**Étape 2 :**

Pour i allant de 0 à 2l-1 faire $R_i = 0$

**Étape 3 :**

Pour h allant de 0 à l-1 faire :

$$i \leftarrow α_i \; ; \; c \leftarrow 0$$

pour j allant de 0 à l-1 faire :

$$u|v \leftarrow (R_{i+j} + x_i{*}y_j) + c$$

*tant que c est différent de 0, faire :*

$$u|v \leftarrow R_{i+j} + c$$

$$R_{i+j} \leftarrow v \; et \; c \leftarrow u$$

$$j \leftarrow j{+}1$$

**Étape 4** : Retourner($R$)

Un tel algorithme LIM randomisé peut être exécuté par logiciel ou au moyen d'un circuit hardware.

Une telle randomisation peut par ailleurs être combinée avec une technique de masquage additif ou soustractif des composantes $x_i$, des composantes $y_j$, ou les deux, consistant à combiner par addition ou par soustraction la composante $x_i$ et/ou la composante $y_j$ avec un nombre aléatoire ou pseudo-aléatoire R' ou avec deux nombres aléatoires ou pseudo-aléatoires R', R". Dans ce cas l'étape de multiplication $x_i{*}y_j$ dans l'algorithme ci-dessus devient par exemple :

$$u|v \leftarrow (R_{i+j} + (x_i\text{-}R'){*}y_j) + c + y_j{*}R'$$

Autre exemple utilisant deux nombres aléatoires R' et R" :

$$u|v \leftarrow (R_{i+j} + (x_i\text{-}R'){*}(y_j\text{-}R")) + c + y_j{*}R' \; x_i{*}R" + y_j{*}R' + R'{*}R"$$

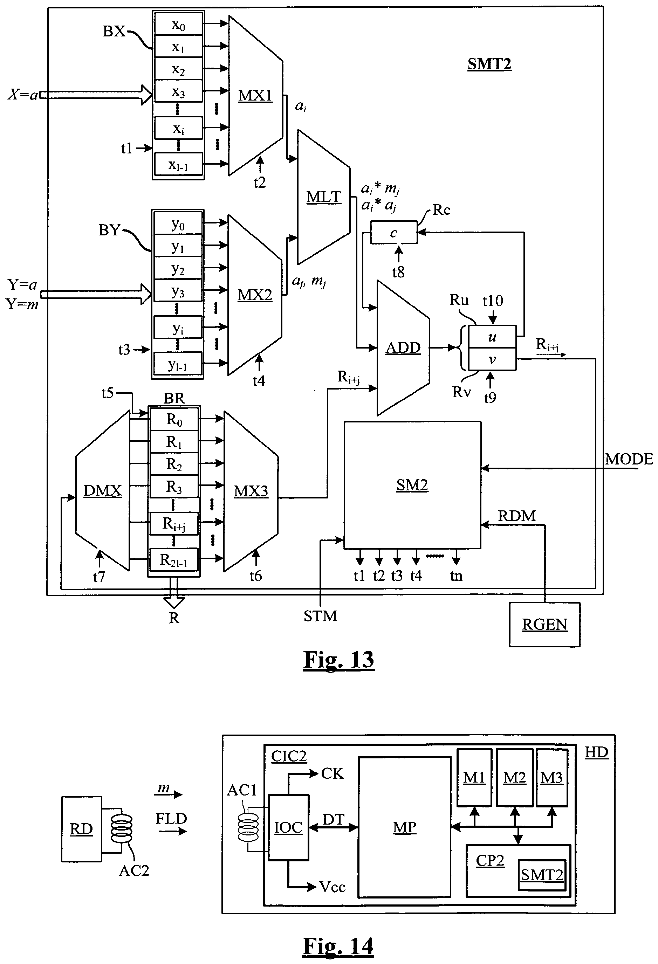

La figure 13 représente un multiplieur hardware randomisé SMT2 qui se distingue du multiplieur SMT1 décrit en relation avec la figure 6 en ce qu'il comporte un séquenceur SM2 (machine d'états, séquenceur microprogrammé,...) qui est configuré pour exécuter l'algorithme de multiplication de la manière qui vient d'être décrite, en randomisant l'ordre de traitement des composantes $x_i$ ou en randomisant l'ordre de traitement des composantes $x_i$ et l'ordre de traitement des composantes $y_i$, avec optionnellement une randomisation additive ou soustractive de ces composantes.

Le vecteur de permutation α est ici un mot aléatoire RDM qui est fourni au multiplieur SMT2 par un générateur de mots aléatoire ou pseudo-aléatoire externe RGEN, mais pourrait aussi être généré en interne par le multiplieur SMT2. Un ou plusieurs autres mots aléatoires peuvent être fournis au multiplieur ou généré par celui-ci si l'option de randomisation des composantes $x_i$, $y_j$ est retenue.

Dans un mode de réalisation, le séquenceur SM2 est configuré pour offrir deux modes de fonctionnement, à savoir un mode de fonctionnement classique où il exécute la multiplication de façon classique, et un mode de fonctionnement randomisé selon l'invention. Le mode de fonctionnement est sélectionné au moyen d'un signal de configuration MODE appliqué au multiplieur, comme représenté sur la figure 13, ou au moyen d'un drapeau MODE programmé dans un registre de configuration du multiplieur.

La figure 14 représente un circuit intégré CIC2 agencé sur un support portatif HD tel une carte plastique, et équipé d'une contre-mesure selon l'invention. Le circuit intégré comporte les même organes que le circuit intégré CIC1 décrit plus haut en relation avec la figure 1, et se distingue de celui-ci en ce que le coprocesseur CP1 est remplacé par un coprocesseur CP2 comprenant le multiplieur randomisé SMT2 de la figure 13. Dans un autre mode de réalisation, le coprocesseur CP1 ne comprend que le multiplieur randomisé SMT2, et n'est prévu que pour effectuer la multiplication randomisée (accélérateur mathématique). Dans d'autres modes de réalisation, le coprocesseur CP1 peut comprendre des moyens d'exécution complète de la fonction d'exponentiation modulaire, y compris la multiplication randomisée, voire des moyens d'exécution complète d'une fonction de cryptographie incluant la fonction d'exponentiation modulaire. Dans encore un autre mode de réalisation, la multiplication randomisée selon l'invention est exécutée par le microprocesseur MP.

Il sera noté que dans la présente description et les revendications, le terme "aléatoire" ou "pseudo-aléatoire" désigne un nombre qui n'est pas connu par l'évaluateur ou par le procédé de test et n'est pas prédictible pour la personne ne connaissant pas les secrets du circuit intégré. Est considéré notamment comme "aléatoire" ou "pseudo-aléatoire" au sens de la présente demande un nombre qui est généré par une fonction qui est déterministe (et donc non aléatoire par nature) mais qui utilise un paramètre secret pour générer ce nombre.

Références citées

(1) P. C. Kocher. Timing attacks on implementations of Diffie-Hellman, RSA, DSS, and other systems. In Neal Koblitz, editor, Advances in Cryptology - CRYPTO '96, volume 1109 of Lecture Notes in Computer Science, pages 104-113. Springer, 1996.

(2) P. C. Kocher, J. Jaffe, and B. Jun. Differential Power Analysis. In M. J. Wiener, editor, Advances in Cryptology - CRYPTO '99, volume 1666 of Lecture Notes in Computer Science, pages 388-397. Springer, 1999.

(3) E. Brier, C. Clavier, and F. Olivier. Correlation Power Analysis with a Leakage Model. In M. Joye and J-J. Quisquater, editors, Cryptographic Hardware and Embedded Systems - CHES 2004, volume 3156 of Lecture Notes in Computer Science, pages 16{29. Springer, 2004.

(4) Colin D. Walter. Sliding Windows Succumbs to Big Mac Attack. In C. K. Koç, D. Naccache, and C. Paar, editors, Cryptographie Hardware and Embedded Systems - CHES 2001, volume 2162 of Lecture Notes in Computer Science, pages 286-299. Springer, 2001

(5) Colin D. Walter. Longer keys may facilitate side channel attacks. In Selected Areas in Cryptography, SAC 2003, volume 3006 of Lecture Notes in Computer Science, pages 42-57. Springer, 2003.

**Revendications**

1. Circuit intégré (CIC2) configuré pour exécuter une fonction d'exponentiation modulaire incluant une fonction de multiplication (SMT2) configurée pour exécuter une opération de multiplication scolaire d'au moins deux mots binaires x (a) et y (a, m) en une pluralité d'étapes élémentaires de multiplication de composantes xi (ai) du mot x par des composantes yj (aj, mj) du mot y, i et j étant des variables d'itération,
   **caractérisé en ce que** la fonction de multiplication est configurée pour exécuter deux multiplications successives de mots binaires x et y en modifiant de manière aléatoire ou pseudo-aléatoire l'ordre dans lequel des étapes élémentaires de multiplication des composantes xi par des composantes yj sont exécutées, à titre de protection du circuit intégré contre une analyse par canal auxiliaire.

2. Circuit intégré selon la revendication 1, dans lequel la fonction de multiplication est configurée pour modifier de manière aléatoire ou pseudo-aléatoire l'ordre dans lequel les composantes xi sont multipliées aux composantes yj sans modifier l'ordre dans lequel les composantes yj sont multipliées aux composantes xi, ou vice-versa.

3. Circuit intégré selon la revendication 1, dans lequel la fonction de multiplication est configurée pour modifier de manière aléatoire ou pseudo-aléatoire à la fois l'ordre dans lequel les composantes xi sont multipliées aux composantes yj et l'ordre dans lequel les composantes yj sont multipliées aux composantes xi.

**4.** Circuit intégré selon l'une des revendications 1 à 3, dans lequel la fonction de multiplication comprend des moyens (RGEN) pour générer ou recevoir un nombre binaire aléatoire ou pseudo-aléatoire (RDM), et pour exécuter la pluralité d'étapes élémentaires de multiplication de composantes xi par des composantes yi, en ce qui concerne au moins l'une des variables d'itération i ou j, selon un ordre déterminé par le nombre binaire aléatoire ou pseudo-aléatoire.

**5.** Circuit intégré selon l'une des revendications 1 à 4, dans lequel la fonction de multiplication est également configurée pour randomiser au moins l'une des composantes xi ou yj au moyen d'au moins un mot (R', R") aléatoire ou pseudo-aléatoire.

**6.** Circuit intégré selon l'une des revendications 1 à 5, dans lequel la fonction de multiplication comprend un mode de fonctionnement ordonné dans lequel les variables d'itération sont incrémentées ou décrémentées selon un ordre constant d'une multiplication de mots binaires à l'autre, et un mode de fonctionnement désordonné dans lequel au moins d'une des variables d'itération est incrémentée ou décrémentée de manière aléatoire ou pseudo-aléatoire d'une multiplication de mots binaires à l'autre.

**7.** Circuit intégré selon l'une des revendications 1 à 6, dans lequel la fonction de multiplication est exécutée par un circuit à logique câblée (SMT2, CP2) cadencé par un séquenceur (SM2).

**8.** Circuit intégré selon l'une des revendication 1 à 7, dans lequel la fonction d'exponentiation modulaire est appliquée à une donnée externe (m) et son exécution comprend au moins une étape de branchement conditionnel vers au moins une première étape de multiplication de mots binaires (a, a) par la fonction de multiplication (SMT2) ou une seconde étape de multiplication de mots binaires (a, m) par la fonction de multiplication (SMT2), le branchement conditionnel étant fonction d'une donnée privée du circuit intégré.

**9.** Circuit intégré selon la revendication 8, dans lequel la donnée privée est un exposant (*d*) de la fonction d'exponentiation modulaire.

**10.** Circuit intégré selon la revendication 8, dans lequel la fonction de traitement de données est une fonction de cryptographie incluant une fonction d'exponentiation modulaire, la donnée privée étant un exposant de la fonction d'exponentiation modulaire formant une clé privée de la fonction de cryptographie.

**11.** Dispositif comprenant un circuit intégré (CIC2) selon l'une des revendications 1 à 10 agencé sur un support (HD).

**12.** Procédé pour protéger contre une analyse par canal auxiliaire un circuit intégré (CIC2) configuré pour exécuter une fonction d'exponentiation modulaire comprenant une opération de multiplication scolaire d'au moins deux mots binaires x (a) et y (a, m) comportant une pluralité d'étapes élémentaires de multiplication de composantes xi (ai) du mot x par des composantes yj (aj, mj) du mot y, i et j étant des variables d'itération,
**caractérisé en ce qu'**il comprend une étape consistant à modifier de manière aléatoire ou pseudo-aléatoire l'ordre dans lequel le circuit intégré exécute des étapes élémentaires de multiplication des composantes xi par des composantes yj, d'une opération de multiplication de mots binaires à l'autre.

**13.** Procédé selon la revendication 12, comprenant une étape consistant à modifier de manière aléatoire ou pseudo-aléatoire l'ordre dans lequel le circuit intégré multiplie les composantes xi aux composantes yj, sans modifier l'ordre dans lequel les composantes yj sont multipliées aux composantes xi, ou vice-versa.

**14.** Procédé selon la revendication 12, comprenant une étape consistant à modifier de manière aléatoire ou pseudo-aléatoire à la fois l'ordre dans lequel le circuit intégré multiplie les composantes xi aux composantes yj et l'ordre dans lequel le circuit intégré multiplie les composantes yj aux composantes xi.

**15.** Procédé selon l'une des revendications 12 à 14, comprenant les étapes consistant à :

- générer un nombre binaire aléatoire ou pseudo-aléatoire (RDM) au sein du circuit intégré, et
- faire exécuter par le circuit intégré la pluralité d'étapes élémentaires de multiplication de composantes xi par des composantes yi selon un ordre déterminé par le nombre binaire aléatoire ou pseudo-aléatoire, en ce qui concerne au moins l'une des variables d'itération i ou j.

**16.** Procédé selon l'une des revendications 12 à 15, comprenant en outre une étape consistant à faire randomiser par le circuit intégré au moins l'une des composantes xi ou yj au moyen d'au moins un mot (R', R") aléatoire ou pseudo-aléatoire.

**17.** Procédé selon l'une des revendication 12 à 16, appliqué à la protection d'un circuit intégré dans lequel la fonction d'exponentiation modulaire est appliquée à une donnée externe (m) et son exécution comprend au moins une étape de branchement conditionnel vers au moins une première étape de multiplication de mots binaires (a, a) ou au moins une seconde étape de multiplication de mots binaires (a, m), le branchement conditionnel étant fonction d'une donnée privée du circuit intégré.

**Patentansprüche**

**1.** Integrierter Schaltkreis (CIC2), der konfiguriert ist, um eine modulare Potenzierungsfunktion auszuführen, die eine Multiplikationsfunktion (SMT2) einschließt, die konfiguriert ist, um eine schulische Multiplikationsoperation von mindestens zwei Binärwörtern x (a) und y (a, m) in einer Vielzahl elementarer Multiplikationsschritte von Komponenten xi (ai) des Wortes x mit Komponenten yj (aj, mj) des Wortes y auszuführen, wobei i und j Iterationsvariablen sind, **dadurch gekennzeichnet, dass** die Multiplikationsfunktion konfiguriert ist, um zwei aufeinanderfolgende Multiplikationen von Binärwörtern x und y durch zufälliges oder pseudozufälliges Ändern der Reihenfolge auszuführen, in der elementare Multiplikationsschritte der Komponenten xi mit den Komponenten yj als Schutz des integrierten Schaltkreises gegen einen Seitenkanalangriff ausgeführt werden.

**2.** Integrierter Schaltkreis nach Anspruch 1, wobei die Multiplikationsfunktion konfiguriert ist, um die Reihenfolge, in welcher die Komponenten xi mit den Komponenten yi multipliziert werden, zufällig oder pseudo-zufällig zu ändern, ohne die Reihenfolge zu ändern, in der die Komponenten yj mit den Komponenten xi multipliziert werden, oder umgekehrt.

**3.** Integrierter Schaltkreis nach Anspruch 1, wobei die Multiplikationsfunktion konfiguriert ist, um sowohl die Reihenfolge, in welcher die Komponenten xi mit den Komponenten yi multipliziert werden, als auch die Reihenfolge, in der die Komponenten yj mit den Komponenten xi multipliziert werden, zufällig oder pseudo-zufällig zu ändern.

**4.** Integrierter Schaltkreis nach einem der Ansprüche 1 bis 3, wobei die Multiplikationsfunktion Mittel (RGEN) zum Erzeugen oder Empfangen einer zufälligen oder pseudo-zufälligen Binärzahl (RDM) umfasst und zum Ausführen der Vielzahl elementarer Multiplikationsschritte von Komponenten xi mit Komponenten yi, was mindestens eine der Iterationsvariablen i oder j betrifft, in einer Reihenfolge, die durch die zufällige oder pseudozufällige Binärzahl bestimmt ist.

**5.** Integrierter Schaltkreis nach einem der Ansprüche 1 bis 4, wobei die Multiplikationsfunktion ebenfalls zum Randomisieren mindestens einer der Komponenten xi oder yj mittels mindestens eines zufälligen oder pseudo-zufälligen Wortes (R', R") konfiguriert ist.

**6.** Integrierter Schaltkreis nach einem der Ansprüche 1 bis 5, wobei die Multiplikationsfunktion einen geordneten Funktionsmodus aufweist, in dem die Iterationsvariablen gemäß einer konstanten Reihenfolge einer Multiplikation von Binärwörtern zur anderen inkrementiert oder dekrementiert werden, und einen ungeordneten Funktionsmodus, in dem mindestens eine der Iterationsvariablen zufällig oder pseudo-zufällig von einer Multiplikation von Binärwörtern zur anderen inkrementiert oder dekrementiert wird.

**7.** Integrierter Schaltkreis nach einem der Ansprüche 1 bis 6, wobei die Multiplikationsfunktion von einem von einem Sequenzer (SM2) getakteten Schaltkreis mit verdrahteter Logik (SMT2, CP2) ausgeführt wird.

**8.** Integrierter Schaltkreis nach einem der Ansprüche 1 bis 7, wobei die modulare Potenzierungssfunktion auf ein externes Datenelement (m) angewendet wird und ihre Ausführung mindestens einen bedingten Verzweigungsschritt zu mindestens einem ersten Multiplikationsschritt von Binärwörtern (a, a) durch die Multiplikationsfunktion (SMT2) oder einem zweiten Multiplikationsschritt von Binärwörtern (a, m) durch die Multiplikationsfunktion (SMT2) umfasst, wobei die bedingte Verzweigung Funktion eines privaten Datenelements des integrierten Schaltkreises ist.

**9.** Integrierter Schaltkreis nach Anspruch 8, wobei das private Datenelement ein Exponent (d) der modularen Potenzierungssfunktion ist.

**EP 2 363 975 B1**

**10.** Integrierter Schaltkreis nach Anspruch 8, wobei die Datenverarbeitungsfunktion eine Verschlüsselungsfunktion ist, die eine modulare Potenzierungsfunktion einschließt, wobei das private Datenelement ein Exponent der modularen Potenzierungsfunktion ist, die einen privaten Schlüssel der Verschlüsselungsfunktion bildet.

**11.** Vorrichtung, umfassend einen integrierten Schaltkreis (CIC2) nach einem der Ansprüche 1 bis 10, der auf einem Träger (HD) eingerichtet ist.

**12.** Verfahren zum Schutz eines integrierten Schaltkreises (CIC2) gegen einen Seitenkanalangriff, der konfiguriert ist, um eine modulare Potenzierungsfunktion auszuführen, umfassend eine schulische Multiplikationsoperation von mindestens zwei Binärwörtern x (a) und y (a, m), aufweisend eine Vielzahl elementarer Multiplikationsschritte von Komponenten xi (ai) des Wortes x mit Komponenten yj (aj, mj) des Wortes y, wobei i und j Iterationsvariablen sind, **dadurch gekennzeichnet, dass** es einen Schritt umfasst, der darin besteht, die Reihenfolge, in welcher der integrierte Schaltkreis elementare Multiplikationsschritte der Komponenten xi mit den Komponenten yj von einer Multiplikationsoperation von Binärwörtern zur anderen ausführt, zufällig oder pseudo-zufällig zu ändern.

**13.** Verfahren nach Anspruch 12, umfassend einen Schritt, der darin besteht, die Reihenfolge, in welcher der integrierte Schaltkreis die Komponenten xi mit den Komponenten yi multipliziert, zu ändern, ohne die Reihenfolge, in welcher die Komponenten yj mit den Komponenten xi multipliziert werden, zu ändern, oder umgekehrt.

**14.** Verfahren nach Anspruch 12, umfassend einen Schritt, der darin besteht, sowohl die Reihenfolge, in welcher der integrierte Schaltkreis die Komponenten xi mit den Komponenten yi multipliziert, als auch die Reihenfolge, in welcher der integrierte Schaltkreis die Komponenten yj mit den Komponenten xi multipliziert, zufällig oder pseudo-zufällig zu ändern.

**15.** Verfahren nach einem der Ansprüche 12 bis 14, umfassend die folgenden Schritte:

- Erzeugen einer zufälligen oder pseudo-zufälligen Binärzahl (RDM) innerhalb des integrierten Schaltkreises, und
- Ausführen, durch den integrierten Schaltkreis, der Vielzahl von elementaren Multiplikationsschritten von Komponenten xi mit Komponenten yi gemäß einer Reihenfolge, die von der zufälligen oder pseudo-zufälligen Binärzahl bestimmt ist, was mindestens eine der Iterationsvariablen i oder j betrifft.

**16.** Verfahren nach einem der Ansprüche 12 bis 15, umfassend ferner einen Schritt, der darin besteht, durch den integrierten Schaltkreis mindestens eine der Komponenten oder xi oder yj mit Hilfe von mindestens einem zufälligen oder pseudo-zufälligen Wortes (R', R") zu randomisieren.

**17.** Verfahren nach einem der Ansprüche 12 bis 16, angewandt auf den Schutz eines integrierten Schaltkreises, wobei die modulare Potenzierungsfunktion auf ein externes Datenelement (m) angewendet wird und deren Ausführung mindestens einen bedingten Verzweigungsschritt zu mindestens einem ersten Multiplikationsschritt von Binärwörtern (a, a) oder mindestens einem zweiten Multiplikationsschritt von Binärwörtern (a, m) umfasst, wobei die bedingte Verzweigung Funktion eines privaten Datenelements des integrierten Schaltkreises ist.

**Claims**

**1.** An integrated circuit (CIC2), configured to execute a modular exponentiation function including a multiplication function (SMT2) configured to execute a scholar multiplication of at least two binary words x (a) and y (a, m) in a plurality of basic multiplication steps of components xi (ai) of word x by components yj (aj, mj) of word y, i and j being iteration variables,
wherein the multiplication function is further configured to execute two successive multiplications of binary words x and y by modifying, in a random or pseudo-random manner, an order in which the basic multiplication steps of components xi by components yj are executed, as a protection of the integrated circuit against a side channel analysis.

**2.** The integrated circuit according to claim 1, wherein the multiplication function is configured to modify, in a random or pseudo-random manner, the order in which the components xi are multiplied with the components yj without modifying order in which the components yj are multiplied with the components xi, or vice-versa.

**3.** The integrated circuit according to claim 1, wherein the multiplication function is configured to modify, in a random or pseudo-random manner, both the order in which the components xi are multiplied with the components yj and the order in which the components yj are multiplied with the components xi.

4. The integrated circuit according to one of claims 1 to 3, wherein the multiplication function includes a component (RGEN) configured to generate or receive a random or pseudo-random binary number (RDM), and configured to execute the plurality of basic multiplication steps of the components xi by the components yj, for at least one of the iteration variables i or j, according to an order determined by the random or pseudo-random binary number.

5. The integrated circuit according to one of claims 1 to 4, wherein the multiplication function is also configured to randomize at least one of the components xi or yj by way of at least one random or pseudo-random word (R', R").

6. The integrated circuit according to one of claims 1 to 5, wherein the multiplication function includes a first operating mode in which the iteration variables are incremented or decremented according to a constant order of multiplication of binary words to another, and a disordered operating mode wherein at least one of the iteration variables is incremented or decremented in a random or pseudo-random manner from one binary word multiplication to another.

7. The integrated circuit according to one of claims 1 to 6, wherein the multiplication function is executed by a hardwired circuit (SMT2, CP2) controlled by a sequencer (SM2).

8. The integrated circuit according to one of claims 1 to 7, wherein the modular exponentiation function is applied to an external data (m), and its execution comprises at least one step of conditional branching to at least one first multiplication step of binary words (a, a) by the multiplication function (SMT2) or a second multiplication step of binary words (a, m) by the multiplication function (SMT2), the conditional branching being a function of a private data of the integrated circuit.

9. The integrated circuit according to claim 8, wherein the private data is an exponent (d) of the modular exponentiation function.

10. The integrated circuit according to claim 8, wherein the data processing function is a cryptographic function including a modular exponentiation function, the private data being an exponent of the modular exponentiation function forming a private key of the cryptographic function.

11. A device comprising an integrated circuit (CIC2) according to one of claims 1 to 10, arranged on a support (HD).

12. A process for protecting against a side channel analysis of an integrated circuit (CIC2) configured to execute a modular exponentiation function comprising a scholar multiplication operation of at least two binary words x (a) and y (a, m) comprising a plurality of basic multiplication steps of components xi (ai) of word x by components yj (aj, mj) of word y, i and j being iteration variables, **characterized in that** it comprises a step of:
modifying, in a random or pseudo-random manner, the order in which the integrated circuit executes basic multiplication steps of components xi by components yj, from one multiplication operation of binary words to another.

13. The process according to claim 12, comprising a step of modifying, in a random or pseudo-random manner, the order in which the integrated circuit multiplies the components xi with the components yj, without modifying one of the order in which the components yj are multiplied with the components xi, or vice-versa.

14. The process according to claim 12, comprising a step of modifying, in a random or pseudo-random manner, both the order in which the integrated circuit multiplies the components xi with the components yj and the order in which the integrated circuit multiplies the components yj with the components xi.

15. The process according to one of claims 12 to 14, comprising the steps of:

    generating a random or pseudo-random binary number (RDM) within the integrated circuit; and
    making the integrated circuit execute a plurality of basic multiplication steps of the components xi with the components yj according to an order determined by the random or pseudo-random binary number, for at least one of the iteration variables i or j.

16. The process according to one of claims 12 to 15, further comprising randomizing at least one of the components xi or yj by way of at least one random or pseudo-random word (R', R").

17. The process according to one of claims 12 to 16, applied to the protection of an integrated circuit wherein the modular exponentiation function is applied to an external data (m), and its execution includes at least one step of conditional branching to at least a first multiplication step of binary words (a, a) or at least a second multiplication step of binary words (a, m), the conditional branching being a function of a private data of the integrated circuit.

**Fig. 1** (Art Antérieur)

$$m^d \text{ modulo } n$$

**Fig. 2** (Art Antérieur)

**Fig. 3 (Art Antérieur)**

LIM(*a,a*) ? LIM(*a,m*) ?

$C_{s'}(m_0)$

$W_0$  $W_2$  $W_k$  $W_{E-1}$

$W_1$

($m_0$)

$C_{s'}(m_1)$

$W_0$  $W_2$  $W_k$  $W_{E-1}$

$W_1$

($m_1$)

$C_{s'}(m_r)$

$W_0$  $W_2$  $W_k$  $W_{E-1}$

$W_1$

($m_r$)

$C_{s'}(m_{M-1})$

$W_0$  $W_2$  $W_k$  $W_{E-1}$

$W_1$

($m_{M-1}$)

$VE_k$  $VE_{E-1}$

$VE_0$
$VE_1$
$VE_2$

**Fig. 4**

$VC_2$  $VCC1$

$VC_1$  $VC_k$

$VC_0$

$VC_{E-1}$

**Fig. 5A**

$VC_k$

$VC_2$  $VCC2$

$VC_1$

$VC_0$

$VC_{E-1}$

**Fig. 5B**

**Fig. 6**

**Fig. 7**

**Fig. 8**

**Fig. 11A**

**Fig. 11B**

**Fig. 12A**

**Fig. 12B**

**Fig. 12C**

$C_{s'}$     $LIM(a,a)$ ?  $LIM(a,m)$ ?

**Fig. 9**

$C_{0,0}$   $C_{0,1}$   $C_{l-1,l-1}$

$W_{P-1,l-1,l-1}$

$W_{2,0,0}$  $W_{i,0,0}$  $W_{0,0,1}$  $W_{i,0,1}$  $W_{P-1,0,1}$  $HE_{P-L}$

$W_{0,0,0}$  $W_{2,0,1}$  $HE_0$  $W_{0,l-1,l-1}$  $W_{i,l-1,l-1}$

$HE_i$  $HE_2$

$W_{2,l-1,l-1}$

$W_{1,0,0}$  (G0)  $W_{1,0,1}$  (G1)  $HE_l$  $W_{1,l-1,l-1}$  (G0)

$W_{P-1,0,1}$

| $C_{0,0}$ → | $W_{0,0,0}$ | $HW_{0,0}$ | $W_{1,0,0}$ | $HW_{0,0}$ | . . . | $W_{k,0,0}$ | $HW_{0,0}$ | . . . | $W_{P-1,0,0}$ | $HW_{0,0}$ |
|---|---|---|---|---|---|---|---|---|---|---|
| $C_{0,1}$ → | $W_{0,0,1}$ | $HW_{0,1}$ | $W_{1,0,1}$ | $HW_{0,1}$ | . . . | $W_{k,0,1}$ | $HW_{0,1}$ | . . . | $W_{P-1,0,1}$ | $HW_{0,1}$ |
| $C_{0,2}$ → | $W_{0,0,2}$ | $HW_{0,2}$ | $W_{1,0,2}$ | $HW_{0,2}$ | . . . | $W_{k,0,2}$ | $HW_{0,2}$ | . . . | $W_{P-1,0,2}$ | $HW_{0,2}$ |
| . . . | . . . | . . . | . . . | . . . | . . . | . . . | . . . | . . . | . . . | . . . |
| $C_{i,j}$ → | $W_{0,i,j}$ | $HW_{i,j}$ | $W_{1,i,j}$ | $HW_{i,j}$ | . . . | $W_{k,i,j}$ | $HW_{i,j}$ | . . . | $W_{P-1,i,j}$ | $HW_{i,j}$ |
| . . . | . . . | . . . | . . . | . . . | . . . | . . . | . . . | . . . | . . . | . . . |
| $C_{l-1,l-1}$ → | $W_{0,l-1,l-1}$ | $HW_{l-1,l-1}$ | $W_{1,l-1,l-1}$ | $HW_{l-1,l-1}$ | . . . | $W_{k,l-1,l-1}$ | $HW_{l-1,l-1}$ | . . . | $W_{P-1,l-1,l-1}$ | $HW_{l-1,l-1}$ |
|  | $HE_0$↑ |  | $HE_1$↑ |  | . . . | $HE_k$↑ |  | . . . | $HE_{M-1}$↑ |  |
|  | $HC_0$ |  | $HC_1$ |  | . . . | $HC_k$ |  | . . . | $HC_{P-1}$ |  |

**Fig. 10**

EP 2 363 975 B1

**Fig. 13**

**Fig. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02071687 A1

**Littérature non-brevet citée dans la description**

- Timing attacks on implementations of Diffie-Hellman, RSA, DSS, and other systems. **P. C. KOCHER.** Advances in Cryptology - CRYPTO '96, volume 1109 of Lecture Notes in Computer Science. Springer, 1996, vol. 1109, 104-113
- Differential Power Analysis. **P. C. KOCHER ; J. JAFFE ; B. JUN.** Advances in Cryptology - CRYPTO '99, volume 1666 of Lecture Notes in Computer Science. Springer, 1999, vol. 1666, 388-397
- Correlation Power Analysis with a Leakage Model. **E. BRIER ; C. CLAVIER ; F. OLIVIER.** Cryptographic Hardware and Embedded Systems - CHES 2004, volume 3156 of Lecture Notes in Computer Science. Springer, 2004, vol. 3156, 16-29

- Sliding Windows Succumbs to Big Mac Attack. **COLIN D. WALTER.** Cryptographie Hardware and Embedded Systems - CHES 2001, volume 2162 of Lecture Notes in Computer Science. Springer, 2001, 286-299
- Longer keys may facilitate side channel attacks. In Selected Areas in Cryptography. **COLIN D. WALTER.** SAC 2003, volume 3006 of Lecture Notes in Computer Science. Springer, 2003, vol. 3006, 42-57